(19) **Europäisches Patentamt / European Patent Office / Office européen des brevets**

(11) **EP 2 588 884 B1**

(12) # FASCICULE DE BREVET EUROPEEN

(45) Date de publication et mention de la délivrance du brevet:
**31.12.2014 Bulletin 2015/01**

(21) Numéro de dépôt: **11738054.3**

(22) Date de dépôt: **01.07.2011**

(51) Int Cl.:
**G01S 19/11** (2010.01)     **G01S 19/21** (2010.01)
**G01S 19/22** (2010.01)

(86) Numéro de dépôt international:
**PCT/IB2011/052916**

(87) Numéro de publication internationale:
**WO 2012/001665 (05.01.2012 Gazette 2012/01)**

(54) **PROCÉDÉ DE RÉDUCTION DE L'ÉBLOUISSEMENT D'UN RÉCEPTEUR RECEVANT DES SIGNAUX DEPUIS DES ÉMETTEURS**

VERFAHREN ZUR BLENDUNGSREDUKTION EINES SIGNALE VON SENDERN EMPFANGENDEN EMPFÄNGERS

METHOD OF REDUCING THE GLARE OF A RECEIVER RECEIVING SIGNALS FROM EMITTERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2010 FR 1055302**

(43) Date de publication de la demande:
**08.05.2013 Bulletin 2013/19**

(73) Titulaire: **Institut Telecom / Telecom Sud Paris 91011 Evry (FR)**

(72) Inventeurs:
• **VERVISCH-PICOIS, Alexandre**
  **F-75010 Paris (FR)**
• **SAMAMA, Nel**
  **F-94430 Chennevieres (FR)**

(74) Mandataire: **Sartorius, Jérome**
  **Cabinet Nony**
  **3, rue de Penthièvre**
  **75008 Paris (FR)**

(56) Documents cités:
**FR-A1- 2 936 640**

• **VERVISCH-PICOIS A ET AL: "Interference Mitigation in a Repeater and Pseudolite Indoor Positioning System", IEEE JOURNAL OF SELECTED TOPICS IN SIGNAL PROCESSING, IEEE, US, vol. 3, no. 5, 1 octobre 2009 (2009-10-01) , pages 810-820, XP011278687, ISSN: 1932-4553, DOI: DOI:10.1109/JSTSP. 2009.2027805 cité dans la demande**
• **SUNG-HYUCK IM, GYU-IN JEE, YONG-BEOM CHO,: "An Indoor Positioning System Using Time-Delayed GPS Repeater", ION GNSS 19TH INTERNATIONAL TECHNICAL MEETING OF THE SATELLITE DIVISION, 26 septembre 2006 (2006-09-26), pages 2478-2483, XP002619717, Fort Worth TX**
• **SUNG-HYUCK IM, GYU-IN JEE: "Feasibility Study of Pseudolite Techniques Using Signal Transmission Delay and Code Offset", ION 2009 INTERNATIONAL TECHNICAL MEETING, 26 janvier 2009 (2009-01-26), pages 798-803, XP002619718, Anaheim CA**

EP 2 588 884 B1

**Description**

La présente invention a pour objet un procédé de réduction de l'éblouissement d'au moins un récepteur au sein d'un système de positionnement ainsi qu'un tel système de positionnement.

L'invention s'applique plus particulièrement à des systèmes utilisant le multiplexage par le code, encore appelés en anglais « *code divisional multiple access* » (CDMA), ce qui est par exemple le cas du GPS (*global positioning system*) et du GNSS (*global navigation satellite system*).

Le phénomène d'éblouissement (« near far » en anglais), aussi appelé phénomène d'interférence intrinsèque, est un problème majeur se produisant dans les systèmes utilisant le CDMA, les signaux étant émis sur la même fréquence. Lorsque les codes utilisés par les sources d'émission du système n'exercent pas une discrimination suffisante par rapport à la différence de puissance qui peut exister entre ces codes à la réception par un récepteur du système, ce phénomène d'éblouissement ou d'interférence intrinsèque se produit. Lorsque le récepteur est ébloui, il n'est plus capable de poursuivre le code le plus faible, même en commettant des erreurs.

Les codes utilisés dans les systèmes connus peuvent être des codes de Gold. Ces derniers sont par exemple décrits dans l'article « *optimal binary sequences for spread spectrum multiplexing* » de Robert GOLD. On appelle encore le code de Gold « code C/A » *(Coarse Acquisition* en anglais) ou « civil ». Sa longueur est de 1023 moments et il est cadencé à 1.023 MHz. La plus petite période des codes de Gold est donc exactement de 1 ms.

Un code de Gold est le résultat de la combinaison de deux séquences de longueur maximale décalées dans le temps. Au sens de l'invention, on désigne par « séquence de longueur maximale » des séquences binaires périodiques générées par des registres à décalage, par exemple de 10 bits pour le GPS et de 9 bits pour le système russe GLONASS. Les propriétés des séquences de longueur maximale sont les suivantes :

- elles sont équilibrées, c'est-à-dire que le nombre de 1 dans le code est égal à 1+ le nombre de 0 dans le code et,
- si grand N est la taille de la séquence, l'auto corrélation vaut -1/N dehors du pic principal.

Pour le positionnement d'objets dans une zone non couverte par des systèmes GPS ou GNSS, il est connu de déployer une constellation d'émetteurs dans ladite zone, cette dernière correspondant par exemple à l'intérieur d'un bâtiment. On peut récupérer un signal sur le toit du bâtiment à l'aide d'une antenne extérieure pour le retransmettre à l'intérieur du bâtiment et faire émettre simultanément par chacun des émetteurs de la constellation locale ce signal. Afin d'éviter qu'au niveau d'un récepteur de la zone les signaux provenant des émetteurs de la constellation n'interfèrent les uns avec les autres, le signal original est retardé différemment sur chacune des antennes des émetteurs de la constellation, ce qui correspond à un système utilisant des émissions décalées.

Néanmoins, dans de tels systèmes, l'éblouissement des signaux demeure. En outre, la présence de trajet indirect dans la zone, par exemple du fait de parois du bâtiment lorsque la zone dans laquelle on cherche à effectuer le positionnement est un bâtiment, perturbe les mesures du code modulant les signaux émis.

Les deux problèmes mentionnés ci-dessus peuvent rendre plus complexe et moins précise la détection de position par le système.

Il existe un besoin pour bénéficier d'un procédé de réduction de l'éblouissement d'au moins un récepteur d'un système comprenant plusieurs émetteurs émettant des signaux modulés par un même code, qui soit relativement simple à mettre en oeuvre tout en étant efficace et peu coûteux.

L'invention a pour but de répondre à ce besoin et elle y parvient, selon l'un de ses aspects, grâce à un procédé de réduction de l'éblouissement d'au moins un récepteur au sein d'un système de positionnement, le système comprenant :

- une pluralité d'émetteurs, chaque émetteur émettant des signaux modulés par un même code dont la fonction d'auto-corrélation présente un pic principal et au moins une plage blanche dans laquelle ladite fonction d'auto-corrélation est minimale, lesdits signaux comprenant pour chaque émetteur un premier signal modulé par le code et un deuxième signal déphasé par rapport au premier signal, le deuxième signal étant modulé par le code qui est retardé par rapport au code modulant le premier signal,
- un récepteur, celui-ci étant configuré pour détecter les signaux émis par les émetteurs et mettant en oeuvre, pour la poursuite du premier et du deuxième signal émis par un des émetteurs, un signal local modulé par le code, procédé dans lequel :
- chaque émetteur émet le premier, respectivement deuxième, signal modulé par le code dont la phase est différente des phases du code modulant le premier, respectivement deuxième, signal des autres émetteurs du système, le pic de corrélation principal du premier signal et celui du deuxième signal émis par chaque émetteur étant disposés dans une plage blanche d'une fonction de corrélation calculée entre le signal local du récepteur et les signaux émis par tous les autres émetteurs du système et,
- on calcule une fonction de corrélation entre le signal local du récepteur et un signal résultant d'une combinaison des signaux émis par les émetteurs du système, de telle sorte que des termes de cette fonction de corrélation s'annulent, de manière à réduire l'éblouissement du récepteur.

Selon l'invention, les signaux émis par les émetteurs du système et le calcul de la fonction de corrélation sont tels qu'en calculant cette seule fonction de corrélation, on annule tout ou partie des termes de ladite fonction traduisant l'éblouissement du récepteur par les signaux autres que les premier et deuxième signaux émis par l'émetteur que l'on cherche à poursuivre, permettant de réduire, voire d'éliminer, l'éblouissement du récepteur.

En outre, dans le procédé décrit ci-dessus, chaque émetteur du système émet simultanément deux signaux et c'est l'un des signaux émis par cet émetteur qui permet de supprimer les interférences causées par l'autre des signaux émis par cet émetteur. En conséquence, la majorité des phénomènes physiques subis par l'un des deux signaux émis par chaque émetteur pourront être les mêmes que ceux subis par l'autre desdits deux signaux. Cela peut permettre de réduire ou d'éliminer également les trajets indirects du signal interférant.

Le code utilisé peut être un code de séquence maximale. La fonction d'auto-corrélation d'un tel code a la propriété de présenter toujours le même niveau de pic secondaire en dehors du pic principal de corrélation, ces pics secondaires prenant tous la valeur la plus faible de la fonction d'auto-corrélation. Une séquence maximale générée sur un registre à 10 bits a un niveau de pic secondaire unique qui vaut -1/1023 quand le pic de corrélation principal vaut 1. Ce niveau de pic secondaire correspond à un rapport $\dfrac{Puissance\_signal\_reçu}{Puissance\_\text{int}erférences}$ égal à 60.2 dB. L'emploi comme code modulant les signaux d'une séquence de longueur maximale permet de réduire de façon très significative la valeur des pics secondaires dans la fonction de corrélation calculée.

En variante, le code modulant les signaux émis par les émetteurs du système n'est pas une séquence de longueur maximale et on choisit préalablement pour les émetteurs du système le déphasage du code modulant le premier signal, respectivement le deuxième signal, d'un émetteur à l'autre, de manière à ce que le pic de corrélation principal du premier signal et celui du deuxième signal de chaque émetteur soient dans une plage blanche de la fonction de corrélation calculée entre le signal local du récepteur et les signaux émis par tous les autres émetteurs du système.

Un tel choix de déphasage du code du premier signal, respectivement du deuxième signal, d'un émetteur à l'autre permet de déplacer dans la fonction de corrélation calculée les pics d'auto-corrélation des signaux émis par chaque émetteur du système de manière à ce qu'aucun pic secondaire de valeur trop importante de ladite fonction de corrélation ne puisse interférer avec un pic de corrélation principal, ce qui permet d'obtenir en termes de réduction des interférences des performances équivalentes à celles d'un système dans lequel un code de séquence de longueur maximale est utilisé.

Lorsque l'on utilise un autre code qu'une séquence de longueur maximale, par exemple un code de Gold, les déphasages peuvent être déterminés en fonction de chaque code car le nombre et l'emplacement des plages blanches diffère d'un code à l'autre. Les plages blanches peuvent être déterminées par un algorithme, décrit par exemple dans la publication VERVISCH-PICOIS A., SAMAMA N., "Interference Mitigation in a Repeater and Pseudolite Indoor Positioning System" IEEE Journal of Selected Topics in Signal Processing, vol 3 issue 5, pp 810-820, October 2009.

Le déphasage du code modulant le premier, respectivement deuxième, signal d'un émetteur à l'autre, vérifie par exemple la relation suivante $\phi_{k+1} - \phi_k > 2$ chips $+ d_{Indoor}$, "$d_{Indoor}$" désignant la distance la plus grande rencontrée dans l'environnement de positionnement, incluant les trajets indirects potentiels et un « chip » correspondant à un moment de code ou un bit de code. Une telle valeur de déphasage peut permettre de réduire l'éblouissement lorsque le code utilisé pour moduler les signaux est une séquence de longueur maximale.

Le déphasage de code entre le code modulant le premier signal émis par un émetteur et le code modulant le premier signal émis par un autre émetteur peut être égal au déphasage de code entre le code modulant le deuxième signal émis par ledit émetteur et le code modulant le deuxième signal émis par cet autre émetteur. En variante, entre deux émetteurs, les premier et deuxième signaux sont déphasés d'une valeur différente.

Le retard du code modulant le deuxième signal par rapport au code modulant le premier signal peut être le même ou, en variante, être différent pour au moins deux émetteurs du système.

Le déphasage entre le premier et le deuxième signal émis par chaque émetteur peut être égal à 180°, à 10 % près, ce qui permet de réduire davantage l'éblouissement du récepteur.

Le procédé peut être mis en oeuvre en intérieur (en *indoor*), servant par exemple pour le positionnement d'objets dans des zones non couvertes par le GPS ou le GNSS, par exemple des bâtiments.

Le récepteur peut effectuer un filtrage anti-repliement des signaux émis par les émetteurs, notamment à l'aide d'un filtre de largeur de bande inférieure ou égale à 10 MHz, notamment inférieure ou égale à 8 MHz, notamment inférieure ou égale à 6 MHz, notamment inférieure ou égale à 4 MHz, notamment inférieure ou égale à 2 MHz, ce qui permet de réduire le bruit lié au repliement spectral, ce dernier ayant un impact direct sur la valeur que prend la fonction de corrélation.

Lorsque le signal utilisé est le signal GPS civil de fréquence L1, 90 % de son énergie est repartie seulement sur 2 MHz. Ainsi, l'emploi d'un filtre passe-bas ou passe-bande ayant une bande passante de 2 MHz peut permettre, avec une fréquence d'échantillonnage comprise entre 4 et 5 MHz, de limiter de façon satisfaisante les conséquences du repliement, tout en travaillant avec des fréquences d'échantillonnage relativement faibles et non consommatrices de trop d'énergie..

En variante, ou en combinaison avec une étape de filtrage anti-repliement, le procédé selon l'invention peut comporter une étape d'échantillonnage par le récepteur des signaux émis par les émetteurs selon une fréquence d'échantillonnage telle que le rapport entre ladite fréquence d'échantillonnage et la largeur du spectre de base desdits signaux émis soit supérieur ou égal à 5, notamment supérieur ou égal à 10, notamment supérieur ou égal à 20, notamment supérieur ou égal à 30, notamment supérieur ou égal à 40, notamment supérieur ou égal à 50. L'utilisation d'une fréquence d'échantillonnage élevée peut permettre que la partie repliée du spectre soit la moins énergétique possible, réduisant ainsi le bruit de recouvrement. Dans le cas du signal GPS civil de fréquence L1, cette largeur de spectre est de 2MHz et la fréquence d'échantillonnage peut être comprise entre 5 MHz et 50 MHz, voire aller jusqu'à 100 MHz. En variante, le signal utilisé peut être un signal GPS militaire dont le spectre a une largeur de 20 MHz, les fréquences d'échantillonnage étant alors de 50, voire de 100 MHz.

Indépendamment ou en combinaison avec les étapes de filtrage anti-repliement et de sur-échantillonnage, le procédé peut comporter une étape selon laquelle le récepteur diminue la fréquence du code modulant les signaux émis par les émetteurs d'un rapport supérieur à 20, notamment compris entre 20 et 600, notamment compris entre 50 et 600, notamment 100 et 600, notamment entre 100 et 150. En réduisant la fréquence du code, l'énergie du signal est concentrée sur une bande plus étroite. On peut ainsi obtenir un signal spectralement plus dense et moins sujet aux interférences du repliement spectral pour la même fréquence d'échantillonnage.

Le récepteur peut être statique, c'est-à-dire que tous les Doppler relatifs entre les signaux provenant des émetteurs du système dans le signal reçu par le récepteur sont nuls.

En variante, le récepteur peut ne pas être statique.

L'invention a encore pour objet, selon un autre de ses aspects, un procédé de réduction de l'éblouissement d'au moins un récepteur au sein d'un système de positionnement, le système comprenant :

- une pluralité d'émetteurs, chaque émetteur émettant des signaux modulés par un même code de séquence de longueur maximale, lesdits signaux comprenant pour chaque émetteur un premier signal modulé par le code et un deuxième signal déphasé par rapport au premier signal, le deuxième signal étant modulé par le code qui est retardé par rapport au code modulant le premier signal,
- un récepteur, celui-ci étant configuré pour détecter les signaux émis par les émetteurs et mettant en oeuvre, pour la poursuite du premier et du deuxième signal émis par un des émetteurs, un signal local modulé par le code,

procédé dans lequel :

- chaque émetteur émet le premier et le deuxième signal et,
- on calcule une fonction de corrélation entre le signal local du récepteur et un signal résultant d'une combinaison des signaux émis par les émetteurs du système, de telle sorte que des termes de cette fonction de corrélation s'annulent de manière à réduire l'éblouissement du récepteur.

L'invention a encore pour objet, selon un autre de ses aspects, un système de positionnement, comportant :

- une pluralité d'émetteurs, chaque émetteur émettant des signaux modulés par un même code dont la fonction d'auto-corrélation présente un pic principal et au moins une plage blanche dans laquelle ladite fonction d'auto-corrélation est minimale, lesdits signaux comprenant pour chaque émetteur un premier signal modulé par le code et un deuxième signal déphasé par rapport au premier signal, le premier, respectivement deuxième, signal étant modulé par le code qui est retardé par rapport au code modulant le premier, respectivement deuxième, signal des autres émetteurs du système, le pic de corrélation principal du premier signal et celui du deuxième signal émis par chaque émetteur étant disposés dans une plage blanche d'une fonction de corrélation calculée entre le signal local du récepteur et les signaux émis par tous les autres émetteurs du système, et

- un récepteur configuré pour recevoir les signaux émis par les émetteurs et mettant en oeuvre, pour la poursuite du premier et du deuxième signal émis par un des émetteurs, un signal local modulé par le code, le récepteur étant configuré pour calculer une fonction de corrélation entre le signal local du récepteur et un signal résultant d'une combinaison des signaux émis par les émetteurs du système.

L'invention a encore pour objet, selon un autre de ses aspects, un émetteur destiné à être utilisé au sein d'un système de positionnement, ledit système comprenant au moins un autre émetteur et un récepteur configuré pour détecter les signaux émis par ledit émetteur et l'autre émetteur, ledit émetteur étant configuré pour émettre un premier signal modulé par un code commun à l'autre émetteur du système et un deuxième signal déphasé par rapport au premier signal, le deuxième signal étant modulé par le code qui est retardé par rapport au code modulant le premier signal.

Le code commun modulant les signaux émis par les émetteurs peut être un code de séquence de longueur maximale.

L'invention a encore pour objet, selon un autre de ses aspects, un récepteur destiné à être utilisé au sein d'un système de positionnement comprenant une pluralité d'émetteurs émettant chacun des signaux modulés par un même code dont la fonction d'auto-corrélation présente un pic principal et au moins une plage blanche dans laquelle ladite fonction d'auto-corrélation est minimale, lesdits signaux comprenant pour chaque émetteur un premier signal modulé par le code et un deuxième signal déphasé par rapport au premier signal, le deuxième signal étant modulé par le code qui est retardé par rapport au code modulant le premier signal,

le récepteur étant configuré pour recevoir les signaux émis par les émetteurs et mettant en oeuvre, pour la poursuite du premier et du deuxième signal émis par un des émetteurs, un signal local modulé par le code, et pour calculer une fonction de corrélation entre le signal local du récepteur et un signal résultant d'une combinaison des signaux émis par les émetteurs du système.

L'invention pourra être mieux comprise à la lecture de la description qui va suivre d'exemples non limitatifs de mise en oeuvre de celle-ci et à l'examen du dessin annexé sur lequel :

- la figure 1 représente de façon schématique un système dans lequel peut être mis en oeuvre un procédé selon l'invention,
- la figure 2 représente fonctionnellement le générateur du signal local du récepteur,
- la figure 3 est une représentation de la fonction d'auto-corrélation d'un code de séquence de longueur maximale,
- la figure 4 représente de façon schématique la fonction de corrélation calculée entre les signaux émis par les émetteurs du système et le signal local du récepteur,
- la figure 5 est une représentation spectrale de l'enveloppe d'un signal GPS sur L1 après échantillonnage à 16 MHz,
- la figure 6 est un tableau mettant en regard largeur de bande de filtre mis en oeuvre par le récepteur et réduction du repliement du signal échantillonné,
- la figure 7 représente la variation de l'écart de puissance maximal toléré entre signal interférant et signal interféré en fonction de la fréquence d'échantillonnage,
- les figures 8 à 11 représentent des résultats de simulation réalisées selon l'invention et selon l'art antérieur et,
- la figure 12 représente la fonction d'auto-corrélation d'un code utilisé selon un autre exemple de mise en oeuvre de l'invention et,
- la figure 13 représente schématiquement une étape d'exécution d'un algorithme de détermination du nombre maximum de répélites pouvant être déployés pour un code donné.

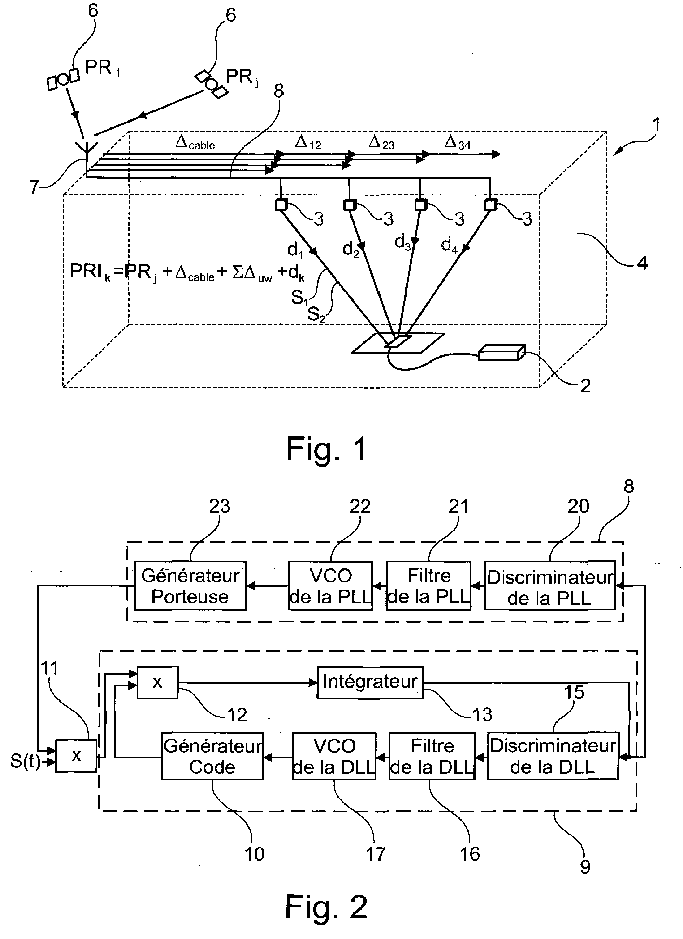

On a représenté à la figure 1 un exemple de système 1 dans lequel peut être mise en oeuvre l'invention.

Le système comprend un récepteur 2 et une pluralité d'émetteurs 3 formant une constellation locale. Comme représenté sur la figure 1, le système 1 peut être mis en oeuvre en intérieur (en *indoor*), par exemple à l'intérieur d'un bâtiment 4. Dans l'exemple d'application qui va être décrit, l'espace situé à l'intérieur du bâtiment 4 n'est pas couvert par un réseau GPS ou GNSS, du fait de la présence des parois du bâtiment 4.

Ce réseau GPS ou GNSS comprend des satellites 6 dont les signaux sont récupérés par une antenne 7 placée à l'extérieur du bâtiment 3, dans une zone couverte par le réseau. Ces signaux récupérés sont alors envoyés via des câbles 8 vers les émetteurs 3 du système 1.

Les émetteurs 3 sont dans l'exemple considéré des répélites. On désigne par « répélites » des émetteurs recevant tous un même signal depuis une antenne, ce signal étant retransmis en permanence aux émetteurs de la constellation et émis simultanément par ces émetteurs. Afin de réduire les interférences entre ces signaux, le signal peut être retardé différemment d'un émetteur à l'autre.

Sur la figure 1, les $PR_j$ désignent les pseudodistances séparant les satellites 6 de l'antenne extérieure 7. Ces pseudodistances $PR_j$ incluent le biais d'horloge du récepteur 2, $\Delta_{câble}$ représente le retard commun correspondant au passage à travers les câbles 8 et $\Delta_{i,i+1}$ correspond au retard volontairement induit entre deux émetteurs 3 successifs de la constellation d'émetteurs. Toujours sur la figure 1, les distances $d_i$ sont les distances séparant les antennes des émetteurs 3 de celle du récepteur 2.

Dans l'exemple considéré, les signaux émis par les émetteurs 3 sont modulés par un code de séquence de longueur maximale. Les séquences de longueur maximale sont des séquences binaires périodiques générées par des registres à décalage (de 10 bits pour le GPS et 9 bits pour le système russe GLONASS).

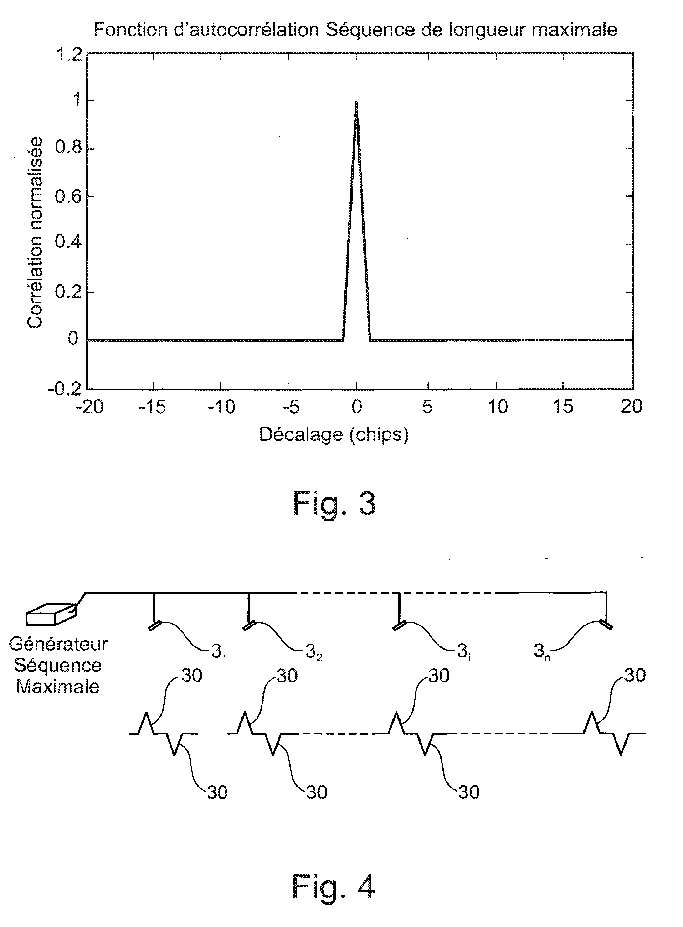

On a représenté à la figure 3 la fonction d'auto-corrélation d'un code de séquence de longueur maximale.

Comme on peut le voir sur cette figure, cette fonction d'auto-corrélation présente toujours le même niveau de pic secondaire en dehors du pic principal de corrélation. Par exemple, avec une séquence maximale générée sur un registre à 10 bits, la fonction d'auto-corrélation de cette séquence a un pic de corrélation principal égal à 1 et un niveau de pic secondaire unique qui vaut -1/1023. Ce niveau de pic secondaire correspond a un rapport

$$\frac{Puissance\_signal\_reçu}{Puissance\_interférences}$$ égal à 60.2 dB.

L'invention n'est cependant pas limitée à l'emploi de séquences de longueur maximale pour moduler les signaux émis par les émetteurs 3, comme on le verra par la suite.

Les signaux émis par les émetteurs sont par exemple des signaux GPS de fréquence L1. Ces signaux sont reçus par l'antenne du récepteur 2 puis amplifiés et convertis en fréquence intermédiaire (FI) plus basse que la fréquence $f_{L1}$.

Ces signaux sont dans l'exemple considéré échantillonnés, puis numérisés avant d'être traités par les canaux de réception du récepteur 2. Ces canaux de réception mettent en oeuvre des boucles de poursuite représentées sur la figure 2.

Ces boucles comprennent deux boucles à verrouillage de phase, la boucle PLL 8 et la boucle DLL 9, servant à démoduler respectivement la porteuse et le code du signal du premier émetteur 3.

Pour la poursuite du premier signal, le récepteur utilise une réplique locale du signal décomposé en deux éléments distincts : porteuse et code, que les boucles 8 et 9 synchronisent en permanence avec le signal émis par le premier émetteur. On peut suivre en parallèle autant d'émetteurs que l'on dispose de canaux dans le récepteur.

La figure 2 montre les boucles de poursuite 8 et 9, imbriquées l'une dans l'autre et utilisant les mêmes corrélateurs (ou intégrateurs).

Le signal local dans un canal du récepteur 2 peut être modélisé sous une forme regroupée comme suit:

$$S_{loc,i}(t,\tau) = \sin(2\pi.(FI + f_{loc}).t + \theta_{loc}).c(t - \tau)$$

$f_{loc}$ correspond à la fréquence Doppler du signal local sur la porteuse et $\theta_{loc}$ correspond à la phase sur cette porteuse, incluant la dérive et le biais d'horloge du récepteur 2, $\tau$ est le retard induit sur le code i que l'on poursuit.

On va d'abord décrire la boucle DLL 9. Cette dernière a pour objectif de synchroniser le code local du récepteur sur le code incident. Cette boucle est par exemple la boucle dite « Avance moins Retard » (ou *Early minus Late* en anglais) qu'on appelle parfois aussi SDLL pour Standard DLL.

Cette boucle comprend un générateur de code 10 configuré pour créer trois répliques du code : une réplique en avance de 0.5 chip (un chip désignant ici un moment de code ou bit de code) qu'on appelle E (*Early*), une réplique en retard de 0.5 chip qu'on appelle L (*Late*) et une réplique sans offset de phase qu'on appelle P (*Prompt*). Ces répliques permettent d'assurer le fonctionnement du discriminateur 15 de la boucle 9 qui sera décrit ci-après et sont générées à partir du signal de commande du VCO 17 qui sera également décrit ultérieurement.

Le signal incident S correspondant à la somme des signaux émis par les émetteurs est mélangé par un mélangeur 11 aux répliques locales de la porteuse puis aux trois répliques du code local issues du générateur de code 10 par un mélangeur 12.

Le signal en résultant est sommé par l'intégrateur 13 durant un temps Ts qui est le temps d'intégration des boucles. Cette opération a deux objectifs : elle joue à la fois le rôle de filtre passe-bas et de corrélateur.

Le filtrage passe bas permet d'éliminer la partie haute fréquence en $f_{loc}$+FI.

Dans l'intégrateur 13, six opérations de corrélation sont effectuées, ces dernières étant désignées comme suit :

- IP correspond à la corrélation Prompt en phase
- IE correspond à la corrélation Early en phase
- IL correspond à la corrélation Late en phase
- QP correspond à la corrélation Prompt en quadrature
- QE correspond à la corrélation Early en quadrature et,
- QL correspond à la corrélation Late en quadrature

Les résultats en sortie de l'intégrateur 13 sont ensuite envoyés vers le discriminateur 15.

Le discriminateur 15 de la boucle 9 est configuré pour détecter l'erreur de phase entre le code c du signal que l'on cherche à poursuivre et le code local. Sa formule en version normalisée est par exemple mais de façon non limitative

$$D = \frac{\sqrt{IE^2 + QE^2} - \sqrt{IL^2 + QL^2}}{\sqrt{IE^2 + QE^2} + \sqrt{IL^2 + QL^2}}$$

Le discriminateur 15 est à l'équilibre lorsque la corrélation en avance est égale à la corrélation en retard.

La sortie du discriminateur est linéaire pour une erreur comprise entre 0.5 et - 0.5 chip, pouvant fonctionner jusqu'à $\pm 1.5$ chip sans diverger.

Le discriminateur 15 permet d'obtenir le déphasage correspondant entre le code du signal que l'on cherche à poursuivre et le code du signal local, ce qui permet à la boucle 9 de corriger de la quantité nécessaire la phase du code local qu'elle génère.

Le signal en sortie du discriminateur 15 est ensuite traité par un filtre 16 configuré pour réduire le bruit dans la boucle 9. Ce filtre 16 peut également permettre d'éliminer les signaux parasites résiduels causés soit par des interférences extérieures, soit par la corrélation croisées avec les autres signaux.

Le filtre 16 est par exemple un filtre passe bas actif apportant du gain dans la bande passante. On peut agir sur les paramètres suivants selon l'objectif recherché :

- l'ordre du filtre et,
- la bande de bruit équivalente Bn.

Par "ordre du filtre", il faut comprendre le nombre d'éléments réactifs, comme des inductances et des capacités, qui composent l'équivalent électronique du filtre numérique.

Un ordre de filtre élevé peut conférer une meilleure tenue en régime dynamique, la boucle 9 étant alors capable de suivre les accélérations, mais étant plus sensible au bruit et surtout plus instable.

En ce qui concerne la bande de bruit équivalente, plus Bn est élevée, plus on tolère des excursions en fréquence dans la boucle et mieux on peut répondre à des sollicitations dynamiques importantes. En contrepartie, le bruit pourra être plus élevé. La boucle 9 étant fortement bruitée mais relativement statique (les variations du Doppler sur le code sont très faibles d'une intégration à la suivante), la valeur de Bn choisie est en général assez faible. Une valeur typique de Bn est 0.5 Hz pour la boucle 9. Dans d'autres exemples, Bn peut descendre jusqu'à 0.05 Hz

Lorsque la boucle 9 est à l'équilibre, la sortie du filtre 16 correspond à la différence de Doppler entre le code modulant les signaux émis par les émetteurs 3 et le code local du récepteur 2. La sortie du filtre 16 est alors reçue en entrée du VCO (*voltage controlled oscillator*) 17.

Le VCO 17 effectue une opération d'intégration du signal en sortie du filtre 16 pour obtenir une phase, un signal d'horloge étant alors généré à partir de cette phase et de la fréquence centrale du VCO, qui vaut par exemple 1,023 MHz, ce signal d'horloge pilotant ensuite le générateur de code 10.

On va maintenant décrire le fonctionnement de la boucle PLL 8. Cette boucle 8 est configurée pour démoduler la porteuse du signal incident. Il s'agit par exemple d'une boucle de Costas.

Cette boucle 8 comprend un discriminateur 20 dont la formule normalisée est par exemple mais de façon non limitative $D = \arctan(\frac{QP}{IP})$ avec QP et IP tels que déjà définis plus haut.

Le signal en sortie du discriminateur 20 est ensuite traité par un filtre 21 qui est du même type que le filtre 16 précédemment décrit. L'ordre du filtre 21 est par exemple égal à n+1, lorsque n est l'ordre du filtre 16, et la valeur de Bn du filtre 21 est supérieure à celle du filtre 16, étant par exemple comprise entre 10 Hz et 18 Hz.

Le signal en sortie du filtre 21 est ensuite traité par un VCO 22 propre à la boucle 8, ce VCO 22 fonctionnant de la même façon que le VCO 17 précédemment décrit.

Le signal en sortie du VCO 22 pilote ensuite un générateur de porteuse 23.

Dans l'exemple de la figure 4, le VCO 17 de la boucle 9 ne reçoit en entrée que le signal en sortie du filtre 16.

Dans une variante non représentée, le signal en sortie du filtre 21 est également transmis au VCO 17 de la boucle 9, le VCO 17 générant alors un signal d'horloge à l'aide de la sortie du filtre 16 de la boucle 9 et du filtre 21 de la boucle 8. Le signal en sortie du filtre 16 est divisé par le rapport entre la fréquence $f_{L1}$ et la fréquence du code, c'est-à-dire par 1540 dans l'exemple décrit. Une telle récupération du signal en sortie du filtre 21 peut notamment permettre d'utiliser pour la bande de bruit équivalente Bn du filtre 16 de la boucle 9 des valeurs descendant jusqu'à 0,05Hz.

Selon l'exemple décrit, chaque émetteur 3 émet un couple de signaux S1 et S2 déphasés d'une certaine fraction de code. Les deux signaux S1 et S2 sont également, dans l'exemple considéré, déphasés de 180°.

Le déphasage entre les deux fractions de code peut être quelconque, par exemple égal ou différent de la demi-période de ce code.

Le signal reçu par le récepteur 2 du fait de l'émission par chaque émetteur 3 du système d'un couple de signaux S1 et S2 a pour expression l'équation (5.1):

$$S(t) = \sum_{k=1}^{n_r} A_k . D_k(t) . \sin(2\pi.(f_{L1} + f_k).t + \theta_k) . [c_{SM}(t - \phi_k - d_k) - c_{SM}(t - \phi_k - \varphi - d_k)]$$
$$+ n(t)$$

$n_r$ étant le nombre de répélites 3 de la constellation locale du système 1, $A_k$ étant l'amplitude du signal émis par le répélite $3_k$, $D_k$ étant le message de navigation associé au répélite $3_k$, $f_k$ étant la fréquence Doppler associée au répélite $3_k$ au niveau de l'antenne du récepteur 2, incluant la dérive du biais d'horloge du récepteur, $\theta_k$ étant la phase de la porteuse associée au répélite $3_k$, $c_{SM}$ étant la séquence de longueur maximale émise par les répélites, $\phi_k$ étant le déphasage induit sur le code pour distinguer entre elles les émissions des répélites $3_k$, $\varphi$ étant le déphasage entre les codes modulant les premier et deuxième signaux émis par la même antenne, $d_k$ étant la pseudodistance entre l'antenne du récepteur 2 et celle du répélite $3_k$, n(t) étant le bruit thermique et autres sources d'erreur.

Dans l'exemple considéré le déphasage de code $\phi_{k+1} - \phi_k$ entre le premier signal du répélite $3_k$ et le premier signal du répélite $3_{k+1}$ est égal au déphasage de code entre les deuxièmes signaux de ces répélites. Ces valeurs de déphasage $\phi_{k+1} - \phi_k$ peuvent être choisies de manière à prendre des valeurs prédéterminées.

On choisit par exemple $\phi_{k+1} - \phi_k$ supérieur à 2 chips + $d_{Indoor}$.. La distance $d_{Indoor}$ est par exemple déterminée en fonction de la taille de l'environnement, dIndoor étant la plus grande distance rencontrée dans l'environnement entre l'émetteur et le récepteur.

$d_{Indoor}$ est par exemple déterminé par lecture sur un plan du bâtiment ou par mesure avec un télémètre laser, avec le cas échéant une marge plus ou moins large.

Comme mentionné précédemment, le déphasage de code $\varphi$ entre les deux signaux S1 et S2 émis par un même répélite $3_k$ peut prendre une valeur quelconque, égale ou non à une demi-période du code modulant lesdits signaux. Ce déphasage $\varphi$ peut être le même pour tous les couples de signaux émis par chaque répélite.

En variante, ce déphasage $\varphi$ peut différer entre au moins deux répélites du système 1.

Les valeurs de déphasage de code $\varphi$ entre deux signaux S1 et S2 émis par un même répélite $3_k$ et les valeurs de déphasage de code $\phi_{k+1} - \phi_k$ d'un répélite à l'autre peuvent être liées.

On choisit par exemple $\varphi = \phi_{k+1} - \phi_k$ pour chaque répélite $3_k$. Une telle valeur pour $\varphi$ permet de faire en sorte que lorsque l'on calcule la fonction d'auto-corrélation du signal S(t), les pics d'auto-corrélation de chaque signal émis par chaque répélite 3 du système ne se chevauchent pas, qu'ils aient pour origine la même antenne ou des antennes différentes.

Le signal local $S_{loc}(t,\tau)$, encore appelé réplique locale du signal, utilisé par le récepteur est défini par l'expression (5.2):

$$S_{loc}(t,\tau) = \sin(2\pi.(FI + f_{loc}).t + \theta_{loc}).c_{SM}(t - \tau)$$

$$(5.2)$$

$f_{loc}$ étant la fréquence Doppler du signal local, $\theta_{oc}$ la phase de la porteuse de ce signal local et $\tau$ la commande de déphasage de la réplique locale de la séquence maximale.

La détermination du répélite 3 poursuivi par le récepteur 2 provient du choix de l'intervalle sur lequel on déplace $\tau$ dans l'expression (5.2).

Lors de la mise en oeuvre du procédé selon l'invention, on corrèle le signal S(t) selon (5.1) avec le signal local selon (5.2).

Pour calculer la fonction de corrélation, on choisit par exemple le temps d'intégration égal à T, T étant égal à un nombre entier de périodes du code de séquence de longueur maximale.

La fonction de corrélation peut alors s'écrire comme une somme de $n_r$ termes $R_k(\tau)$ défini selon l'expression (5.3) :

$$R_k(\tau) = \frac{A_k}{T}\int_{t=0}^{t=T}\cos(2\pi(f_k - f_{loc}).t + \theta_k - \theta_{loc}).c_{SM}(t - \phi_k - d_k).c_{SM}(t - \tau).dt$$

$$-\frac{A_k}{T}\int_{t=0}^{t=T}\cos(2\pi(f_k - f_{loc}).t + \theta_k - \theta_{loc}).c_{SM}(t - \phi_k - \varphi - d_k).c_{SM}(t - \tau).dt \qquad (5.3)$$

Lorsque le récepteur 2 est en poursuite du signal du répélite $3_i$, on peut écrire : $f_{loc} \approx f_i$ et $\theta_{loc} \approx \theta_i$.

Par "récepteur en acquisition", il faut comprendre la phase lors de laquelle le récepteur détermine « grossièrement » les signaux présents, leurs déphasages ainsi que leurs Doppler.

Par "récepteur en poursuite", il faut comprendre la phase postérieure à l'acquisition correspondant à l'asservissement des phases des des répliques locales des signaux trouvés par l'acquisition. La phase de poursuite peut permettre d'obtenir en continu la mesure du temps de propagation en mesurant les évolutions au cours du temps du déphasage entre le signal incident et sa réplique locale générée par le récepteur.

Dans l'hypothèse où le récepteur est statique, alors $f_i = f_k$ pour tout répélite $3_k$ de la constellation.

Dans ces conditions, l'expression (5.3) peut être réécrite en (5.4) ci-dessous :

$$R_k(\tau) =$$

$$\frac{A_k}{T}\cos(\theta_k - \theta_{loc})\left[\int_{t=0}^{t=T}c_{SM}(t - \phi_k - d_k).c_{SM}(t - \tau).dt - \int_{t=0}^{t=T}c_{SM}(t - \phi_k - \varphi - d_k).c_{SM}(t - \tau).dt\right]$$

Soit la fonction triangle $R(\tau)$, par exemple définie dans la publication KAPLAN Elliot & HEGARTY Christopher, "Understanding GPS Principles and Applications", Artech House, 2006, 2nd Ed. Chapter 4, 730 p., cette fonction étant telle que :

$$R(\tau) = (1 - \frac{|\tau|}{T_c}) \text{ Pour } \tau \in \left[-T_c ; +T_c\right] \qquad (5.5)$$

$R(\tau) = 0$ Partout ailleurs

$T_c$ est la durée d'un chip de code.

Si N est égal au nombre de chips dans un code, alors la fonction d'auto-corrélation d'une séquence maximale sur l'intervalle ] 0 ; T [ est égale à $-\frac{1}{N} + \frac{N+1}{N}R(\tau - T/2)$

Dans ces conditions, on peut réécrire l'expression (5.4) selon (5.7):

$$R_k(\tau) = A_k \frac{N+1}{N}\cos(\theta_k - \theta_{loc})\left[R(\tau - \phi_k - d_k - T/2) - R(\tau - \phi_k - \varphi - d_k - T/2)\right] \qquad (5.7)$$

Dans le cas présent, du fait que le récepteur 2 est en mode « poursuite », $\tau$ appartient à l'un des deux intervalles suivants :

$$\left[-T_c + T/2 + \phi_i + d_i ; T_c + T/2 + \phi_i + d_i\right] \cup \left[-T_c + T/2 + \phi_i + \varphi + d_i ; T_c + T/2 + \phi_i + \varphi + d_i\right]$$

Sur ces intervalles, $R_k(\tau)$ s'annule pour tout $k \neq i$. En effet, les intervalles sur lesquels (5.7) n'est pas nuls sont pour $k \neq i$:

$$\left[-T_c + T/2 + \phi_k + d_k; T_c + T/2 + \phi_k + d_k\right] \cup \left[-T_c + T/2 + \phi_k + \varphi + d_k; T_c + T/2 + \phi_k + \varphi + d_k\right]$$

Or, dans l'exemple considéré, ces intervalles sont tous disjoints, car on a choisi $\varphi = \phi_{j+1} - \phi > 2\,Tc + d_{Indoor}$, d'où il ressort que

$\varphi = \phi_{j+1} - \phi_j > 2\,Tc + d_j$ pour tous $j \le n_r$

On peut donc en conclure que l'expression (5.7) est nulle pour tous $k \neq i$. Si on veut écrire la corrélation complète, il suffit d'écrire l'expression (5.7) pour $k = i$.

Si le récepteur 2 poursuit le premier signal S1 émis par le répélite $3_k$ considéré, le second terme $R(\tau - \phi_k - d_k - T/2)$ de l'expression (5.7) est nul puisque l'on se trouve sur l'intervalle $[-T_c + T/2 + \phi_k + d_k; T_c + T/2 + \phi_k + d_k]$ et le terme $\cos(\theta_k - \theta_{loc})$ vaut 1.

Si le récepteur 2 poursuit le deuxième signal S2 émis par répélite $3_k$ considéré, c'est-à-dire celui dont le code est déphasé de $\varphi$, le premier terme $R(\tau - \phi_k - d_k - T/2)$ de l'expression (5.7) est nul tandis que le terme $\cos(\theta_k - \theta_{loc})$ vaut 1.

L'expression (5.7) prend alors comme valeur, selon que l'on poursuit le premier ou le deuxième signal émis par le répélite $3_k$ considéré

$$R_i(\tau) = \pm A_i \frac{N+1}{N} R(\tau - \phi_i - d_i - T/2) + n(\tau) \qquad (5.8)$$

Ainsi, en choisissant des intervalles d'intégration tels que lorsque l'on poursuit le couple de signaux S1 et S2 émis par un répélite $3_k$, tous les termes de la fonction de corrélation calculée entre les signaux émis par les répélites et le signal local du récepteur 2 et traduisant les phénomènes d'éblouissement s'annulent, de sorte qu'il ne reste que le pic de corrélation principal 30 du premier ou du deuxième signal émis par le répélite que l'on poursuit, comme on peut le voir sur la figure 4.

Les pics 30 de la figure 4, représentent les pics principaux de corrélation des divers répélites 3. Chacun d'entre eux est libre de l'inter-corrélation d'avec les autres répélites 3, bien que les couples de signaux émis par chaque répélite 3 soient tous présents dans le signal reçu par le récepteur et possèdent tous la même fonction d'auto-corrélation.

La seule interférence présente sur le pic principal 30 d'un signal S1 est le niveau secondaire du signal S2 émis sur la même antenne et qui vaut -1/1023 pour une séquence de longueur maximale générée sur 10 bits.

Le choix des intervalles d'intégration peut résulter des valeurs choisies pour les déphasages de code entre les premiers, respectivement deuxièmes, signaux d'un émetteur à l'autre et du déphasage de code au sein d'un couple de premier et deuxième signaux émis par un même émetteur.

On va maintenant considérer un exemple de mise en oeuvre de l'invention dans lequel le récepteur 2 est statique et travaille en acquisition.

Dans cet exemple, les émetteurs 3 sont des répélites et les signaux à acquérir sont répartis sur un code unique. L'acquisition de l'ensemble des signaux peut être effectuée selon un balayage unique de temps/fréquence.

En acquisition, on fait varier $\tau$ et $f_{loc}$ lorsque l'on calcule la fonction de corrélation entre le signal S(t) selon l'expression (5.1) reçu par le récepteur 2 et le signal local selon l'expression (5.2), de manière à balayer un maximum de fréquences et l'intégralité du code.

Dans cet exemple, on considère que le récepteur 2 est statique. Ainsi, on peut effectuer l'approximation $f = f_k$ pour tout $k \le n_r$.

Dans ces conditions, la fonction de corrélation calculée s'écrit comme la somme de termes selon (5.9):

$$R_k(\tau) = \frac{A_k}{T} \int_{t=0}^{t=T} \cos(2\pi(f - f_{loc}).t + \theta_k - \theta_{loc}).c_{SM}(t - \phi_k - d_k).c_{SM}(t - \tau).dt$$

$$-\frac{A_k}{T} \int_{t=0}^{t=T} \cos(2\pi(f - f_{loc}).t + \theta_k - \theta_{loc}).c_{SM}(t - \phi_k - \varphi - d_k).c_{SM}(t - \tau).dt \qquad (5.9)$$

On peut réduire l'expression (5.9) en expression (5.10), comme expliqué dans l'ouvrage VAN DIERENDONCK A. J., "Global Positioning System: Theory & Applications ", Progress in Astronautics and aeronautics, 1996, Chapter 8, Vol 1, 777p.

$$R_k(\tau) = A_k \cos(\theta_k - \theta_{loc}) \frac{\sin(\pi(f - f_{loc})T)}{\pi(f - f_{loc})T} \int_{t=0}^{t=T} c_{SM}(t - \phi_k - d_k).c_{SM}(t - \tau).dt$$

$$- A_k \cos(\theta_k - \theta_{loc}) \frac{\sin(\pi(f - f_{loc})T)}{\pi(f - f_{loc})T} \int_{t=0}^{t=T} c_{SM}(t - \phi_k - \varphi - d_k).c_{SM}(t - \tau).dt$$

$$(5.10)$$

Comme mentionné dans l'exemple ci-dessus dans lequel le récepteur 2 fonctionne en poursuite, on peut regrouper les termes de l'expression (5.10) et ils s'éliminent alors par regroupement car les intégrales valent toujours -1/1023 pour un code généré sur 10 bits.

La figure théorique d'acquisition, qui correspond à une figure en trois dimensions où la valeur de la corrélation est donnée en fonction du déphasage du code et de la différence Doppler entre les porteuses, ressemble dans l'exemple considéré à une succession de sinus cardinaux espacés de $\varphi = \phi_{k+1} - \phi_k$ suivant l'axe du décalage du code, qui correspond au temps.

Concernant les trajets indirects, si le calcul de la limite $d_{Indoor}$ comprend la distance maximale possible de ces trajets, les trajets indirects dont le Doppler est identique à celui du signal direct sont éliminés.

Bien que toutes les équations (5.1) à (5.8) utilisent des signaux analogiques, l'écrasante majorité des récepteurs 2 aujourd'hui utilisés est numérique, ce qui implique une étape d'échantillonnage des signaux analogiques. Or, cet échantillonnage peut avoir des conséquences sur l'efficacité du procédé de réduction de l'éblouissement décrit ci-dessus.

Le théorème d'échantillonnage de Nyquist-Shannon, rappelé par exemple dans la publication KAPLAN Elliot & HEGARTY Christopher, "Understanding GPS Principles and Applications", Artech House, 2006, 2nd Ed. Chapter 6, 730 p, énonce que pour qu'un signal soit échantillonné sans perte d'information, il faut que la fréquence d'échantillonnage soit au minimum le double de la plus grande fréquence contenue dans ce signal. Formulé autrement, ce théorème énonce qu'il faut que la fréquence d'échantillonnage soit égale au double de la plus grande fréquence du spectre du signal pour que ce dernier ne se replie pas sur lui-même après l'opération d'échantillonnage. Le repliement spectral induit un bruit ayant un impact direct sur la valeur que prend la fonction de corrélation.

Dans le cas de signaux GPS, le code utilisé pour moduler les signaux est de largeur illimitée, c'est-à-dire qu'il n'existe pas de bande finie qui puisse le contenir et que l'on ne peut échantillonner ces signaux sans perte d'information. En effet, comme le spectre du code de signaux GPS est en bande illimitée, quelle que soit la fréquence d'échantillonnage, il y a toujours une partie de ce spectre qui se replie dans la bande spectrale d'échantillonnage direct (donc la bande utile au sens de la bande la plus grande sur laquelle le recouvrement est minimal) qui vaut la moitié de la fréquence d'échantillonnage.

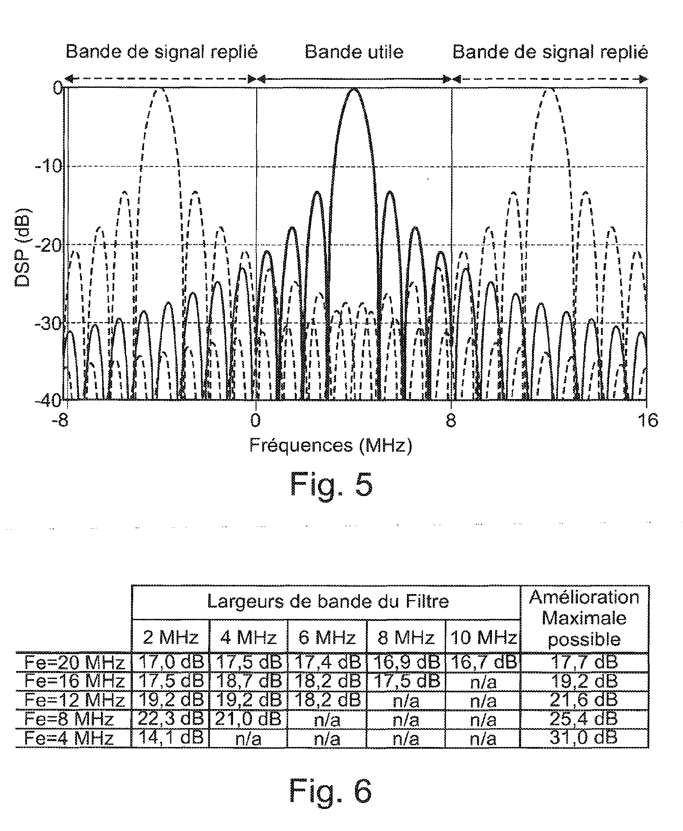

Les codes utilisés dans les systèmes GPS, par exemple les codes de Gold sont tels que 90 % de l'énergie se trouve dans les 2.046 MHz de largeur du lobe principal du spectre de ce code. Lorsque le récepteur 2 échantillonne à une fréquence d'échantillonnage de 4 à 5 MHz et avec une fréquence intermédiaire comprise entre 1 et 1.25 MHz, on permet que le lobe principal ne se replie pas sur lui-même. Néanmoins, les lobes secondaires se replient sur le lobe principal, entraînant les interférences. On a représenté à la figure 5 la densité spectrale de puissance d'un tel code de signal GPS échantillonné.

Comme on peut le voir sur cette figure 5, sur la bande de fréquences comprises entre 0 et 8 MHz, dans laquelle l'échantillonnage est direct, une partie des lobes secondaires, qui sont représentés en pointillés, se replie.

Cet effet de repliement est dû à la création de « répliques » du signal sur les bandes de fréquences extérieures à la bande utile, la largeur de ces bandes valant la moitié de la fréquence d'échantillonnage.

Comme ces « répliques » se forment symétriquement au signal utile aussi bien à droite qu'à gauche de la bande utile, pour minimiser l'effet du repliement, un récepteur GPS utilise une fréquence intermédiaire qui est le plus possible au centre de la bande utile.

Dans l'exemple de la figure 5, la fréquence d'échantillonnage est égale à 16 MHz, d'où il résulte que la bande utile est comprise entre 0 à 8 MHz. On choisit comme fréquence intermédiaire optimale pour le récepteur en termes de réduction d'interférence pour le lobe principal 4 MHz. La figure 5 montre que sur la bande utile, le signal utile est plus fort que les parties repliées, ce qui n'est pas le cas en dehors de cette bande. La figure 5 montre également que les lobes repliés provenant de chacune des deux répliques sont les plus faibles possible au niveau du lobe principal.

Du fait des effets néfastes du recouvrement spectral sur la fonction de corrélation calculée, il est souhaitable de réduire ce recouvrement.

On va maintenant décrire des exemples de solution pour ce faire.

Trois solutions pour réduire, voire éliminer, l'influence du recouvrement spectral associé à l'échantillonnage vont être décrits. Ces solutions peuvent être mises en oeuvre indépendamment les unes des autres. Deux d'entre elles, voire toutes, peuvent en variante être combinées ensemble.

Selon un premier exemple, le procédé comporte une étape de filtrage du signal analogique S(t) reçu par le récepteur 2, après que ce signal a été converti en fréquence basse FI par le récepteur 2 et juste avant son échantillonnage et sa numérisation.

Lors de cette étape, on utilise par exemple un filtre passe-bas ou un filtre passe-bande analogique, de largeur de bande inférieure ou égale à 10 MHz, notamment inférieure ou égale à 8 MHz, notamment inférieure ou égale à 6 MHz, notamment inférieure ou égale à 4 MHz, notamment inférieure ou égale à 2 MHz.

Cette étape permet de limiter la bande du spectre du signal à une valeur inférieure à celle de la bande utile, dont la largeur vaut la moitié de la fréquence d'échantillonnage.

Contrairement à ce qui a été représenté à la figure 5, lorsque le signal ainsi filtré est échantillonné, la partie repliée du spectre s'en trouve fortement diminuée puisque préalablement filtrée. L'élimination des fréquences les plus hautes permet de se placer dans les conditions d'application du théorème de Nyquist-Shannon mentionné ci-dessus.

Dans le cas où les satellites 6 émettent des signaux GPS civil sur L1, 90% de l'énergie du spectre de ces derniers est répartie sur seulement 2 MHz.

Le filtre utilisé lors de cette étape présente par exemple une bande passante de 2 MHz et la fréquence d'échantillonnage du récepteur 2 peut être comprise entre 4 et 5 MHz.

Grâce à l'utilisation du filtre, on peut ainsi limiter l'effet du recouvrement spectral.

La figure 6 est un tableau montrant l'effet d'un filtre anti-repliement analogique appliqué au signal incident avant échantillonnage par le récepteur, comme cela vient d'être décrit.

Pour obtenir les résultats figurant dans ce tableau :

- on sur-échantillonne un signal en bande de base (non modulé, pour lequel la fréquence $f_{L1}$ ou FI est nulle), à une fréquence d'échantillonnage de 200 MHz. On mesure un premier rapport de puissance, désigné par $RP_{max}$, ce rapport de puissance correspondant à l'optimum que l'on peut espérer obtenir en utilisant un filtre anti-repliement dans ces conditions,
- on sous-échantillonne à une fréquence plus basse le signal sur-échantillonné. On obtient un deuxième rapport de puissance, plus faible que le premier, et qui correspond à un signal dont le spectre est replié, en l'absence de filtre anti-repliement.

La différence entre le premier et le deuxième rapport de puissance correspond à l'amélioration maximale que l'on peut espérer de l'utilisation d'un filtre anti-repliement.

On effectue ensuite à nouveau les simulations décrites ci-dessus en ajoutant un filtre passe-bas de type Butterworth d'ordre 10 sur le signal incident juste avant l'opération de sous-échantillonnage. On récupère alors le premier rapport de puissance RPmax dont les valeurs figurent sur la figure 6, qui traduit l'effet du filtrage anti-repliement sur le signal.

La figure 6 montre les améliorations apportées à RPmax grâce à l'utilisation d'un filtre anti-repliement pour une fréquence d'échantillonnage donnée. La première colonne du tableau indique la fréquence d'échantillonnage et la dernière colonne indique l'amélioration maximale que l'on peut obtenir, étant donnée la fréquence de sur-échantillonnage utilisée. La mention « n/a » indique qu'une largeur de filtre donnée n'est pas adaptée car elle dépasse la moitié de la fréquence d'échantillonnage concernée.

Comme on peut le voir sur la figure 6, quelle que soit la largeur du filtre utilisée, il y a une amélioration significative de valeur de la fonction de corrélation. Les effets positifs du filtrage anti-repliement l'emportent sur l'effet de lissage qu'implique l'utilisation du filtre anti-repliement.

On va maintenant décrire un autre exemple de solution selon l'invention pour réduire le phénomène de recouvrement spectral.

Selon cet exemple, le procédé comporte une étape de sur-échantillonnage. Cette technique de sur-échantillonnage est notamment connue en informatique dans la modélisation 3D des objets en mouvement pour supprimer les petites stries qui apparaissent au niveau des contours, c'est pourquoi on l'appelle également « anticrènelage ».

Selon cette étape de sur-échantilonnage, on utilise une fréquence d'échantillonnage largement supérieure à celle du spectre de base du signal, ce qui permet de diminuer l'énergie de la partie repliée du spectre. Grâce à cette étape de sur-échantillonnage, le bruit de recouvrement est réduit. La Déposante a constaté que plus l'on augmente la fréquence d'échantillonnage, plus les pics secondaires de la fonction de corrélation tendent vers la valeur unique de -1/1023, ceci résultant du fait qu'une fréquence d'échantillonnage élevée diminue la portion de l'énergie du spectre qui se replie.

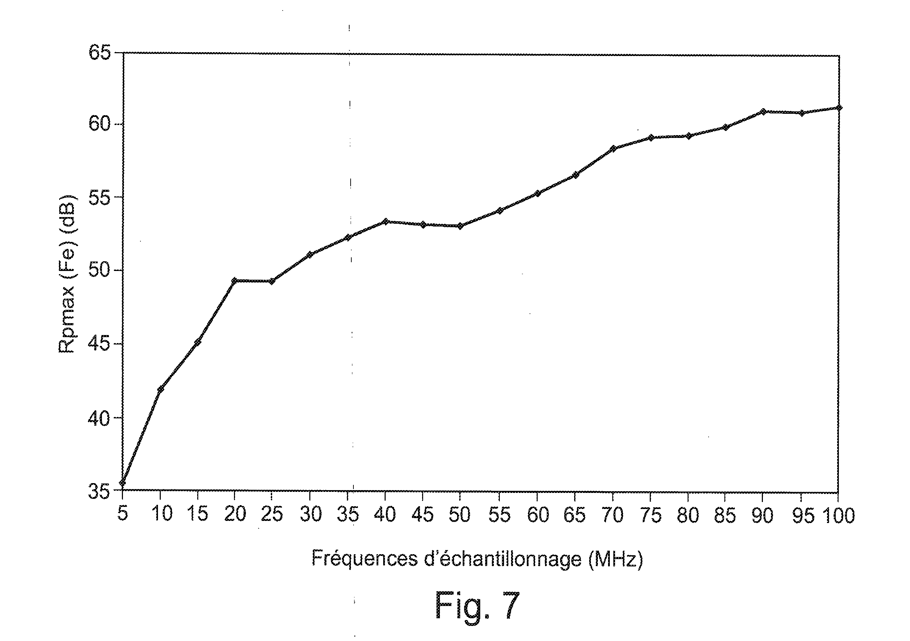

La figure 7 représente l'écart maximal de puissance entre signal interférant et signal interféré Rpmax en fonction de la fréquence d'échantillonnage lors de simulations réalisées de la même manière que celles décrites en référence à la figure 6. Les simulations dont les résultats sont représentés sur la figure 7 sont réalisées en l'absence d'étape de filtrage anti-repliement décrite ci-dessus.

Les résultats représentés à la figure 7 sont par ailleurs obtenus avec un récepteur 2 ayant une fréquence intermédiaire ou de modulation égale au quart de la fréquence d'échantillonnage. Dans les simulations effectuées, les valeurs de fréquence d'échantillonnage sont comprises entre 5 MHz et 100 MHz, pour rester dans des valeurs techniquement « raisonnables ».

On peut constater que le sur-échantillonnage permet de repousser l'écart maximum de puissance entre signal interférant et signal interféré R$pmax$ jusqu'à des valeurs qui peuvent être importantes. A partir d'une valeur d'écart de 60 dB, atteinte pour une fréquence d'échantillonnage supérieure à 80 MHz, on peut en effet considérer que l'éblouissement du récepteur est réduit de façon très satisfaisante.

On peut également constater que lorsque l'on augmente la fréquence de sur-échantillonnage d'un facteur égal à 10, on obtient un gain d'environ 20 dB. En effet, entre Fe = 10 MHz et Fe = 100 MHz, le gain est de 19.5 dB, et entre Fe = 5 MHz et Fe = 50 MHz, le gain est de 18 dB.

On comprend de la figure 7 que l'augmentation de la fréquence d'échantillonnage peut apporter, par rapport au seul filtrage anti-repliement, un gain substantiel de performance.

L'invention n'est cependant pas limitée à la mise en oeuvre à la fois d'une étape de sur-échantillonnage et d'une étape de filtrage anti-repliement.

Néanmoins, l'emploi d'une fréquence d'échantillonnage élevée lors de cette étape de sur-échantillonnage, par exemple lorsque cette fréquence approche 100 MHz, est consommatrice d'énergie. C'est pourquoi, une autre solution selon l'invention pour réduire le repliement spectral est de mettre en oeuvre une étape de réduction de la fréquence du code utilisé.

Le procédé mis en oeuvre peut comporter une étape de réduction de la fréquence du code modulant les signaux émis par les répélites 3. Lors d'une telle étape, on n'agit de préférence pas sur la fréquence porteuse des signaux émis. On peut éviter de modifier la partie analogique du récepteur 2, mais n'agir que sur la partie numérique du récepteur 2.

Après que l'on a réduit la fréquence du code, le spectre du signal reste en bande illimitée, mais l'énergie est concentrée sur une bande plus étroite. Ainsi, on peut bénéficier d'un signal spectralement plus dense et qui sera moins sujet aux interférences du repliement spectral pour la même fréquence d'échantillonnage.

On peut par exemple diminuer la fréquence du code jusqu'à un facteur 20 lorsque l'on ne souhaite pas modifier la fréquence du message de navigation. Dans le cas d'un signal GPS, on aura alors 1 code par bit d'information au lieu des 20 codes par bit du signal GPS classique.

Si on désire aller au-delà de ce rapport 20, il est possible de diminuer la fréquence du message de navigation ou de supprimer le message de navigation.

Néanmoins, on ne peut diminuer la fréquence du code et, par conséquent, augmenter sa durée (donc la durée d'intégration), que jusqu'à une certaine limite qui doit être compatible avec la dynamique de la porteuse du signal.

On sait, par exemple de la publication KAPLAN Elliot & HEGARTY Christopher, "Understanding GPS Principles and Applications", Artech House, 2006, 2nd Ed. Chapter 5, 730 p, que la durée d'intégration du code doit de préférence être inférieure à 600 ms.

Ainsi, il est possible, lors de cette étape de réduire la fréquence du code jusqu'à un facteur 600.

Une réduction de la fréquence du code d'un facteur compris entre 100 et 150 peut s'avérer adaptée selon l'application considérée.

Avec un récepteur ayant une fréquence d'échantillonnage de 20 MHz, on peut atteindre des performances équivalentes à celles que l'on obtiendrait pour des fréquences d'échantillonnage de 2 à 3 GHz et un code à 1.023 MHz.

Des simulations réalisées dans les mêmes conditions que celles dont les résultats ont été reportés sur la figure 7, c'est-à-dire avec emploi d'un filtre anti-repliement, montrent que pour une fréquence d'échantillonnage de 20 MHz et une réduction de la fréquence du code d'un facteur 100, on obtient un écart de puissance maximum entre signal interférant et signal interféré de 81 dB, ce qui correspond à une réduction significative de l'éblouissement. Cet écart passe à 95 dB pour une fréquence d'échantillonnage de 100 MHz dans les mêmes conditions.

En outre, on constate que la réduction de la fréquence du code modulant les signaux a pour conséquence l'augmentation de la durée d'un chip du code. Or, cette augmentation va de pair avec l'augmentation de la plage « physique » de performance d'une boucle de réduction des trajets indirects courts mise en oeuvre par voie logicielle par le récepteur 2 et non représentée sur la figure 2. Cette boucle, encore appelée SMICL est par exemple décrite dans la publication JARDAK N., VERVISCH-PICOIS A., JEANNOT M., FLUERASU A., SAMAMA N., "Optimised tracking loop for multipath mitigation Case of repeater based indoor positioning system", ENC-GNSS 2008, April 2008, Toulouse, France.

Pour une fréquence de code de 1.023 MHz, la boucle SMICL peut réduire les trajets jusqu'à 0.5 chip, ce qui correspond à 150 mètres dans le cas d'un signal GPS. Si par exemple on utilise une fréquence de code réduite d'un facteur 20, la boucle SMICL réduira l'effet des trajets indirects jusqu'à 150 x 20 = 3000 mètres. Autrement dit, les trajets indirects qui mettent en échec la SMICL doivent être plus grands que 3 km, ce qui est un avantage considérable car peu de trajet dépassent une telle distance lorsque le système 1 est mis en oeuvre en intérieur.

On va maintenant exposer différents résultats de simulation avec et sans mise en oeuvre du procédé selon l'un des exemples décrits ci-dessus.

On utilise pour réaliser ces simulations quatre émetteurs 3 qui sont des répélites : R1, R2, R3 et R4. Le répélite R1 a un signal dont la puissance ne varie pas. Les répélites R2, R3 et R4 ont des puissances égales. Le temps réel simulé vaut 1 seconde. La fréquence d'échantillonnage est de 50 MHz. Le rapport porteuse/bruit du récepteur (C/N0) associé au signal reçu provenant du répélite R1 vaut 50 dB-Hz.

Pour les simulations en mode dynamique, les Doppler associés à chaque répélite valent respectivement : 0 Hz pour R1, -2.77 Hz pour R2, -4.61 Hz pour R3, -4.45 Hz pour R4.

Sauf précision, les boucles de poursuite du récepteur sont paramétrées avec un temps d'intégration de 1 ms et les filtres de boucle sont d'ordre 1 et ont pour caractéristique Bn = 1 Hz pour le filtre 16 de la boucle DLL 9 et Bn = 10 Hz pour le filtre 21 de la boucle PLL 8.

On fait varier la puissance des signaux de R2, R3 et R4 et on observe l'effet sur la mesure de la pseudodistance entre le récepteur et R1, de manière à faire apparaître l'effet du procédé de réduction de l'éblouissement décrit ci-dessus.

Faire varier plusieurs niveaux de puissance tout en laissant un niveau de puissance inchangé peut correspondre au cas réel d'un masquage du signal d'un émetteur par un obstacle.

Deux simulations sont menées pour chaque niveau de puissance de R2, R3, R4 identique dans les mêmes conditions. La première simulation utilise comme code pour chaque émetteur du système une séquence de longueur maximale décalée: La deuxième simulation est réalisée en utilisant pour chaque émetteur le couple de signaux décrit ci-dessus.

Avec un récepteur 2 en mode dynamique, les Doppler induits sur chaque répélite 3 correspondent à ceux d'un récepteur 2 évoluant à 1 m/s selon une petite portion de trajectoire circulaire de 10 mètres de diamètre centrée sur un carré de 20 mètres de côté aux quatre coins duquel seraient situés les répélites. La séquence choisie est celle où les différences de Doppler sont les plus variées les unes par rapport aux autres. On choisit pour le déplacement du récepteur 2 une portion de cercle car c'est un mouvement commode à simuler et assez représentatif de cas réels.

Le temps réel simulé est d'une seconde, ce qui correspond à 1000 mesures. Ces mesures sont toujours prises à partir du moment où les boucles sont accrochées, c'est-à-dire à partir du moment où elles ont quitté le régime transitoire et où elles sont en régiment permanent. Autrement dit, les boucles sont accrochées lorsque les répliques locales du signal incident, la porteuse et le code, sont en phase avec le signal incident. Ces répliques sont alors « asservies » au signal incident.

On choisit de ne simuler qu'une seconde effective de temps pour deux raisons :

- pour limiter le temps de simulation,
- parce que les Doppler ne varient pas énormément durant une seconde.

Les paramètres de boucles du récepteur tels qu'ils ont été choisis par défaut sont typiques de ceux de boucles de poursuite répondant à la dynamique d'un signal GPS.

Concernant le bruit thermique, on utilise un signal de base assez puissant. Un C/N0 de 50 dB-Hz reste toutefois dans les limites de la réalité pour un système de positionnement en *indoor.*

On choisit une fréquence d'échantillonnage égale à 50 MHz, de manière à obtenir un compromis entre la vitesse d'exécution du simulateur et la réduction de l'effet du repliement spectral.

Les résultats de simulation ont été obtenus pour des rapports de puissance entre le répélite R1 et les trois autres répélites qui vont de 0 dB à 50 dB.

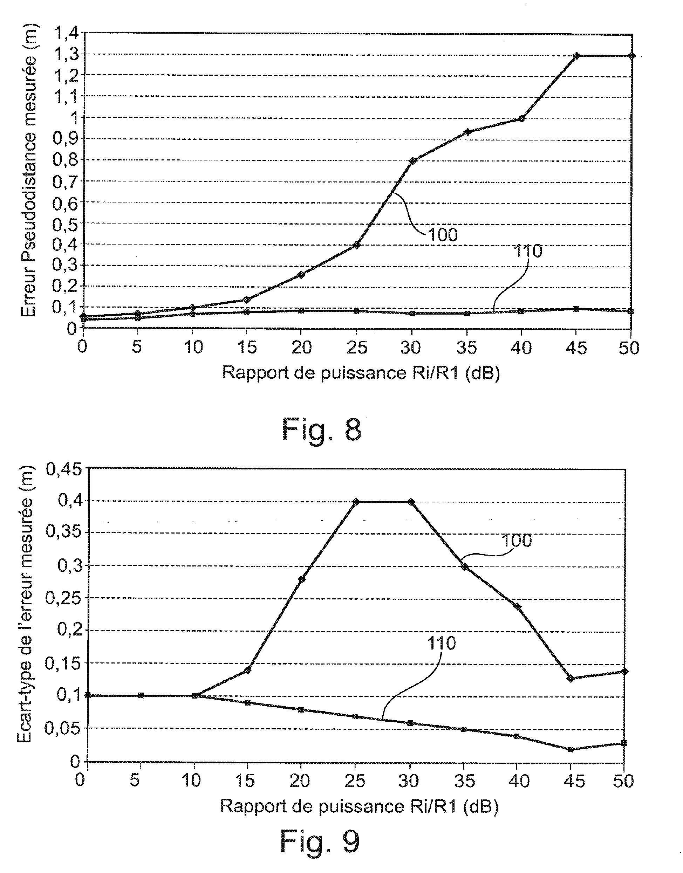

Les figures 8 et 9 correspondent au cas où le récepteur 2 est statique, la figure 8 présentant la valeur de l'erreur sur la pseudodistance entre le récepteur et le répélite R1 en fonction du rapport de puissance entre le signal issu de R1 et les signaux issus des autres répélites Ri pour i ≠ 1 et la figure 9 donnant les écarts-type obtenus pour ces mêmes erreurs. Sur les figures 8 et 9, les résultats obtenus lorsque les répélites émettent chacun un couple de signaux S1 et S2, comme décrit précédemment, correspondent à la courbe 110 et les résultats lorsqu'un seul signal modulé par un code de séquence de longueur maximale est émis par chaque répélite correspondent à la courbe 100.

On remarque au vu des figures 8 et 9 qu'à partir d'un rapport de puissance compris entre 20 et 30 dB, avec le seul emploi d'une séquence de longueur maximale, le récepteur 2 est ébloui. Comme représenté sur la figure 8, selon la courbe 100 sans émission par chaque émetteur du couple de signaux S1 et S2, l'erreur sur la pseudodistance augmente de manière significative jusqu'à atteindre dans l'exemple considéré une valeur de 1.3 mètres lorsque les rapports de puissance sont supérieurs à 40 dB, les pics secondaires d'inter-corrélation issus des autres émetteurs que le répélite R1 étant alors très importants par rapport au pic de corrélation principal.

Comme le montre la courbe 110, l'émission d'un couple de signaux S1 et S2 selon l'invention permet d'empêcher que les pics secondaires d'inter-corrélation dominent le pic de corrélation principal et la mesure de pseudodistance est fiable. On comprend de la figure 9 que le procédé selon l'invention permet une grande stabilité dans l'erreur, même en présence d'un éblouissement important.

Des simulations avec une fréquence d'échantillonnage plus élevée et dont les résultats ne sont pas représentés ici donne un écart-type plus stable encore pour le procédé selon l'invention, du fait que l'on réduit l'influence du repliement spectral, comme expliqué ci-dessus.

Ainsi, avec un récepteur 2 statique, l'élimination des interférences est très satisfaisante, voire totale, comme le montrent les figures 8 et 9.

On va maintenant considérer dans les simulations effectuées que le récepteur est dynamique, c'est-à-dire que les Doppler relatifs des répélites ne sont pas nuls.

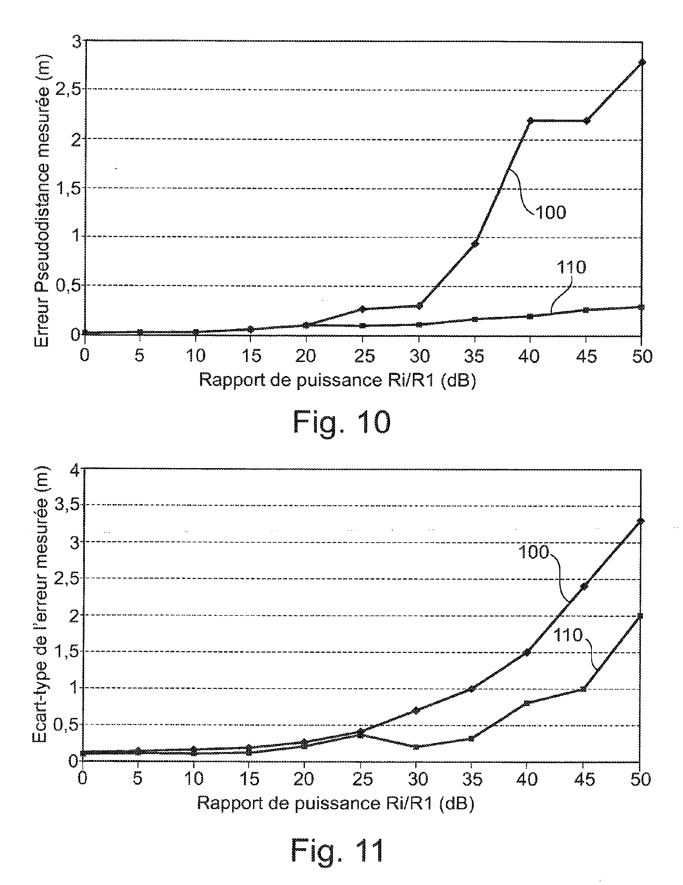

Les figures 10 et 11 correspondent à des simulations similaires à celles des figures 8 et 9 mais en diffèrent par le fait que les Doppler associés à chaque répélite valent respectivement : 0 Hz pour R1, -2.77 Hz pour R2, -4.61 Hz pour R3, -4.45 Hz pour R4.

La comparaison des courbes 100 et 110 sur les figures 10 et 11 montre que le procédé selon l'invention permet de réduire l'erreur sur la pseudodistance par rapport à l'art antérieur.

Pour diminuer la dégradation que causent vis-à-vis du récepteur 2 les signaux des autres émetteurs présentant un Doppler, on peut jouer sur les filtres 16 et 21 des boucles de poursuite utilisées par le récepteur 2 et représentées sur la figure 2. Ces filtres peuvent permettre de réduire le bruit dans la boucle, mais aussi l'influence des « parasites » fréquentiels que sont les autres émetteurs. Lorsque l'invention est mise en oeuvre en intérieur, la dynamique attendue est celle de l'intérieur d'un bâtiment. On peut alors utiliser pour le récepteur 2 des boucles de poursuite avec des filtres 16 et 21 ayant des bandes plus étroites et donc de réduire les oscillations parasites.

En réduisant la bande des filtres 16 et 21 classiquement utilisés par le récepteur GPS, on peut ainsi réduire les perturbations dues aux Doppler des autres émetteurs que celui dont on cherche à acquérir et/ou poursuivre le signal. On réduit par exemple la bande de ces filtres 16 et 21 d'un facteur par exemple égal à 2, voire 5, voire 10. La bande de 1Hz des filtres 16 et 21 habituellement utilisée peut être réduite à 0,5 Hz, voire à 0,1 Hz. La bande des filtres 16 et 21 peut même être réduite d'un facteur égal à 20 à partir de 1 Hz. En variante, seule la bande du filtre 16 peut être réduite d'un des facteurs mentionnés ci-dessus, la bande du filtre 21 restant égale à 1 Hz.

L'invention n'est pas limitée aux exemples qui viennent d'être décrits, et notamment à l'emploi comme code modulant les signaux émis par les émetteurs d'une séquence de longueur maximale.

On peut par exemple utiliser à la place un générateur de code de Gold unique en optimisant le choix des délais d'émission entre les répélites. On pourrait également en variante utiliser d'autres codes connus pour le GPS tel qu'un code P (*Precise ou Protected*).

Pour un récepteur utilisant un système de positionnement avec n répélites et un signal source unique, le signal S(t) reçu par le récepteur 2 est une somme de n signaux ayant tous le même code pseudo aléatoire mais retardés les uns par rapport aux autres, comme le montre l'équation (5.20) ci-dessous

$$S(t) = \sum_{i=1}^{n_s} \sum_{k=0}^{n-1} A_{i,k} \sin(2\pi.f_{L1}.t + \varphi_{i,k}(t)).d_i(t - \tau_{0,k} - T_{i,k}).c_i(t - \tau_{0,k} - T_{i,k}) + n(t) \qquad (5.20)$$

ns étant le nombre de satellites 6 reçus par l'antenne extérieure 7 et retransmis par les répélites 3, n étant le nombre de répélites 3 déployés pour le positionnement intérieur, $A_{i,k}$ étant amplitude du signal du satellite $6_i$ retransmis par le répélite $3_k$, $\varphi_{i,k}(t)$ étant la phase de la porteuse du signal du satellite $6_i$ retransmis par le répélite $3_k$, la dépendance en t indiquant la présence d'un Doppler, $\tau_{0,k}$: délai induit sur le signal entre le répélite $3_k$ et le répélite $3_0$ (celui qui n'est pas retardé) pour k = 0...n-1, $T_{i,k}$ étant le retard égal à la somme du temps de propagation à l'extérieur du signal du satellite $6_i$, du temps de propagation à l'intérieur depuis l'antenne du répélite $3_k$ et du biais d'horloge du récepteur 2, $d_i(t)$ étant le message de navigation pour le satellite $6_i$, $c_i(t)$ étant le code pseudo-aléatoire du signal du satellite $6_i$ et n(t) prenant en compte le bruit thermique et autres sources d'interférence.

Durant le traitement du signal, le résultat de la corrélation est en fait une somme d'éléments de la même fonction d'auto-corrélation mais pris en différents points. Afin de réduire les interférences responsables de l'éblouissement causées par les pics secondaires, il est possible d'utiliser les propriétés de la fonction d'auto-corrélation d'un code de Gold. L'une de ces propriétés est l'existence de 3 niveaux de pic secondaire et plus particulièrement le plus petit d'entre eux (1/1023) qui est celui de la fonction d'auto-corrélation d'une séquence maximale et qui est aussi le plus fréquemment rencontré.

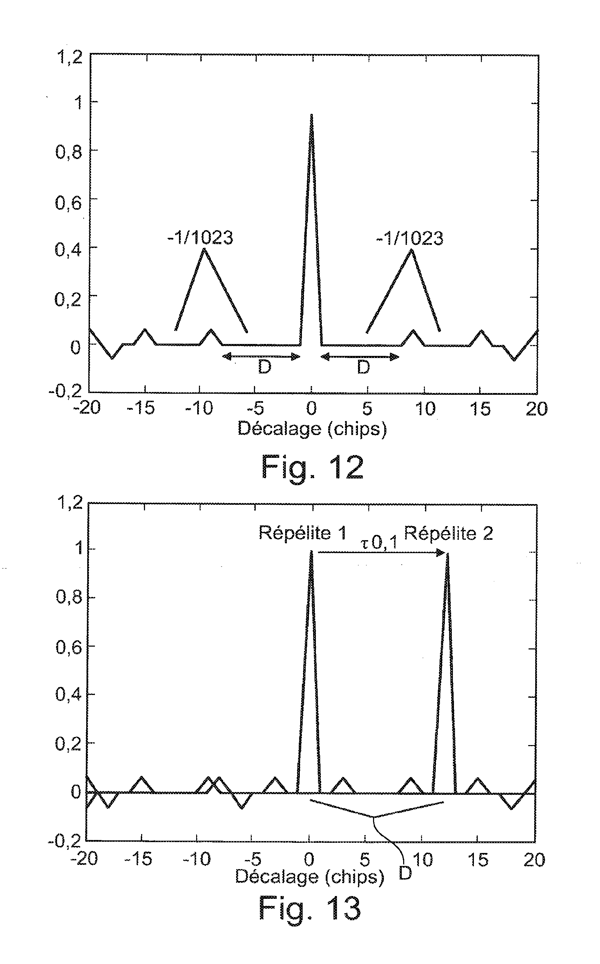

La figure 12 montre la courbe théorique de la fonction d'auto-corrélation du code de Gold d'un signal GPS. Cette dernière est centrée sur le pic de corrélation principal.

La figure 12 met en évidence l'existence de « plages blanches » D où la corrélation est minimale. La longueur de ces plages est très variable selon les codes, mais peut aller jusqu'à plusieurs chips. On peut alors choisir la valeur des délais $\tau_{0,k}$ entre les répélites, ceci ayant pour effet de « déplacer » les pics d'auto-corrélation sur la figure de corrélation du signal formé par l'ensemble des signaux émis par les répélites du système 1. En d'autres termes, il est possible de translater les pics de corrélation principaux du signal incident, qui sont les parties utiles de la fonction de corrélation, en jouant sur les délais relatifs $\tau_{0,k}$ des différentes émissions des répélites. L'idée de base est de choisir les valeurs des délais $\tau_{0,k}$ de telle sorte que chaque pic de corrélation principal correspondant à chaque répélite soit translaté dans une plage blanche commune à toutes les autres fonctions d'auto-corrélation additionnées.

Ainsi, aucun pic secondaire supérieur à -1/1023 n'interférera avec un pic de corrélation principal du signal incident reçu par le récepteur 2. On aura ainsi des performances en termes de réduction des interférences tout à fait équivalentes à celles d'un système utilisant comme code une séquence de longueur maximale.

Pour parvenir à un système équivalent à celui qui utilise comme code une séquence de longueur maximale, on impose trois conditions aux valeurs des délais $\tau_{0,k}$ entre les répélites :

- il n'existe qu'une seule optimisation par code car chaque fonction d'auto-corrélation est unique,
- pour être optimal, chaque pic de corrélation principal se trouve sur le plus bas niveau de toutes les autres fonctions d'auto-corrélation,
- les délais $\tau_{0,k}$ sont choisis de façon à ce que soient respectés les 2 chips de largeur des pics de corrélations principale plus la taille de l'environnement, c'est-à-dire que la taille des « plages blanches » D est d'au moins 2 chip + dIndoor (dIndoor étant définie comme ci-dessus).

On obtient par exemple un système équivalent à celui qui utilise comme code une séquence de longueur maximale en procédant comme suit.

Lorsque le système ne comporte que deux répélites émettant des signaux modulés par un code de Gold, on peut choisir les signaux émis par ces répélites en utilisant la propriété de symétrie par rapport au pic principal des fonctions d'auto-corrélation des codes de Gold. Ainsi, si une plage blanche de la fonction d'auto-corrélation est suffisamment grande et donc adéquate pour placer un pic de corrélation, elle sera automatiquement adéquate pour l'autre pic de corrélation.

Lorsque le système comporte au moins trois répélites, il est souhaitable de s'assurer que les pics secondaires de la fonction d'auto-corrélation du répélite nouvellement additionné au système à deux répélites précédemment considéré n'interféreront pas avec l'ensemble des pics principaux des répélites précédemment disposés.

Les plages blanches sont relativement nombreuses pour que l'optimisation des $\tau_{0,k}$ soit possible pour un nombre acceptable de répélites.

On utilise par exemple pour déterminer le nombre maximum de répélites qui peuvent être déployés pour une fonction d'auto-corrélation donnée l'algorithme mentionné dans la publication VERVISCH-PICOIS A., SAMAMA N., « Interference mitigation in a repeater and pseudolite indoor positionning system », IEEE Journal of selected topics in signal processing, vol 3 issue 5, pp810-820, October 2009.

La première étape de cet algorithme consiste à rechercher la plage blanche la plus proche du pic principal de la fonction d'auto-corrélation d'un répélite. Une fois la plage blanche trouvée, on y place le deuxième répélite en superposant les deux fonctions d'auto-corrélation des répélites, comme sur la figure 13.

Une fois cette première étape effectuée, on recherche lors d'une deuxième étape la plage blanche la plus proche à partir de la fonction résultant de la superposition de ces fonctions d'auto-corrélation.

On procède ainsi de façon itérative avec les répélites suivants jusqu'à ce qu'il n'y ait plus de plage blanche, ce qui est la condition d'arrêt de l'algorithme.

L'expression « comportant un » doit être comprise comme synonyme de l'expression « comportant au moins un », sauf lorsque le contraire est précisé.

## Revendications

**1.** Procédé de réduction de l'éblouissement d'au moins un récepteur (2) au sein d'un système (1) de positionnement, le système comprenant :

- une pluralité d'émetteurs (3), chaque émetteur émettant des signaux modulés par un même code dont la fonction d'auto-corrélation présente un pic principal et au moins une plage blanche (D) dans laquelle ladite fonction d'auto-corrélation est minimale, lesdits signaux comprenant pour chaque émetteur (3) un premier signal (S1) modulé par le code et un deuxième signal (S2) déphasé par rapport au premier signal, le deuxième signal (S2) étant modulé par le code qui est retardé par rapport au code modulant le premier signal (S1),
- un récepteur (2), celui-ci étant configuré pour détecter les signaux émis par les émetteurs (3) et mettant en oeuvre, pour la poursuite du premier (S1) et du deuxième (S2) signal émis par un des émetteurs (3), un signal local modulé par le code,

procédé dans lequel :
- chaque émetteur (3) émet le premier (S1), respectivement deuxième (S2), signal modulé par le code dont la phase est différente des phases du code modulant le premier (S1), respectivement deuxième (S2), signal des autres émetteurs (3) du système, le pic de corrélation principal du premier signal (S1) et celui du deuxième signal (S2) émis par chaque émetteur (3) étant disposés dans une plage blanche (D) d'une fonction de corrélation calculée entre le signal local du récepteur et les signaux émis par tous les autres émetteurs (3) du système, et,
- on calcule une fonction de corrélation entre le signal local du récepteur et un signal résultant d'une combinaison des signaux émis par les émetteurs du système.

2. Procédé selon la revendication 1, dans lequel le code utilisé est un code de séquence de longueur maximale.

3. Procédé selon la revendication 1, dans lequel on choisit préalablement pour les émetteurs (3) du système (1) le déphasage du code modulant le premier (S1), respectivement deuxième (S2), signal d'un émetteur (3) à l'autre, de manière à ce que le pic de corrélation principal du premier signal et celui du deuxième signal de chaque émetteur soient dans une plage blanche (D) de la fonction de corrélation calculée entre le signal local et les signaux émis par tous les autres émetteurs du système.

4. Procédé selon la revendication précédente, dans lequel le déphasage de code entre le code modulant le premier signal (S1) émis par un émetteur (3) et le code modulant le premier signal (S1) émis par un autre émetteur (3) est égal au déphasage de code entre le code modulant le deuxième signal (S2) émis par ledit émetteur (3) et le code modulant le deuxième signal (S2) émis par l'autre émetteur (3).

5. Procédé selon l'une quelconque des revendications précédentes, dans lequel le retard du code modulant le deuxième signal (S2) par rapport au code modulant le premier signal (S1) est le même pour au moins deux émetteurs (3) du système.

6. Procédé selon l'une quelconque des revendications 1 à 4, dans lequel le retard du code modulant le deuxième signal (S2) par rapport au code modulant le premier signal (S1) est différent pour au moins deux émetteurs (3) du système.

7. Procédé selon l'une quelconque des revendications 1 à 6, dans lequel le déphasage entre le premier (S1) et le deuxième (S2) signal émis par chaque émetteur est égal à 180° à 10 % près.

8. Procédé selon l'une quelconque des revendications précédentes, étant mis en oeuvre en intérieur (*indoor*).

9. Procédé selon l'une quelconque des revendications précédentes, le récepteur (2) effectuant un filtrage anti-repliement des signaux émis par les émetteurs (3), notamment à l'aide d'un filtre de largeur de bande inférieure ou égale à 10 MHz, notamment inférieure ou égale à 8 MHz, notamment inférieure ou égale à 6 MHz, notamment inférieure ou égale à 4 MHz, notamment inférieure ou égale à 2 MHz.

10. Procédé selon l'une quelconque des revendications précédentes, le récepteur (2) effectuant un échantillonnage des signaux émis par les émetteurs (3) selon une fréquence d'échantillonnage telle que le rapport entre ladite fréquence d'échantillonnage et la largeur du spectre de base desdits signaux émis soit supérieur à 2, notamment supérieur ou égal à 5, notamment supérieur ou égal à 10, notamment supérieur ou égal à 20, notamment supérieur ou égal à 30, notamment supérieur ou égal à 40, notamment supérieur ou égal à 50.

11. Procédé selon la revendication précédente, dans lequel les émetteurs (3) émettent un signal GPS de fréquence L1 et dans lequel la fréquence d'échantillonnage est comprise entre 5 MHz et 100 MHz.

12. Procédé selon l'une quelconque des revendications précédentes, dans lequel le récepteur (3) diminue la fréquence du code modulant les signaux émis par les émetteurs (3) d'un rapport supérieur à 20, notamment compris entre 20 et 600, notamment entre 50 et 600, notamment entre 100 et 600, notamment entre 100 et 150.

13. Système (1) de positionnement, comportant :

- une pluralité d'émetteurs (3), chaque émetteur émettant des signaux modulés par un même code dont la fonction d'auto-corrélation présente un pic principal et au moins une plage blanche (D) dans laquelle ladite fonction d'auto-corrélation est minimale, lesdits signaux comprenant pour chaque émetteur (3) un premier signal (S1) modulé par le code et un deuxième signal (S2) déphasé par rapport au premier signal (S1), le premier (S1), respectivement deuxième (S2), signal étant modulé par le code qui est retardé par rapport au code modulant le premier (S1), respectivement deuxième (S2), signal des autres émetteurs (3) du système, le pic de corrélation principal du premier signal (S1) et celui du deuxième signal (S2) émis par chaque émetteur (3) étant disposés dans une plage blanche (D) d'une fonction de corrélation calculée entre le signal local du récepteur et les signaux émis par tous les autres émetteurs (3) du système,

et

- un récepteur (2) configuré pour recevoir les signaux émis par les émetteurs (3) et mettant en oeuvre, pour la poursuite du premier (S1) et du deuxième (S2) signal émis par un des émetteurs (3), un signal local modulé par le code, le récepteur (2) étant configuré pour calculer une fonction de corrélation entre le signal local du récepteur et un signal résultant d'une combinaison des signaux émis par les émetteurs du système.

**14.** Emetteur (3), destiné à être utilisé au sein d'un système (1) de positionnement tel que défini à la revendication 13, ledit système comprenant au moins un autre émetteur (3) et un récepteur (2) mettant en oeuvre un signal local et configuré pour détecter les signaux émis par ledit émetteur (3) et l'autre émetteur (3), ledit émetteur (3) étant configuré pour émettre un premier signal (S1) modulé par un code commun à l'autre émetteur du système et un deuxième signal (S2) déphasé par rapport au premier signal (S1), le deuxième signal (S2) étant modulé par le code qui est retardé par rapport au code modulant le premier signal (S1),

le pic de corrélation principal du premier signal (S1) et celui du deuxième signal (S2) émis par chaque émetteur (3) étant disposés dans une plage blanche (D) d'une fonction de corrélation calculée entre le signal local du récepteur (2) et les signaux émis par tous les autres émetteurs (3) du système (1).

**15.** Récepteur (2), destiné à être utilisé au sein d'un système (1) de positionnement tel que défini à la revendication 13, ledit système comprenant une pluralité d'émetteurs (3) émettant chacun des signaux modulés par un même code dont la fonction d'auto-corrélation présente un pic principal et au moins une plage blanche (D) dans laquelle ladite fonction d'auto-corrélation est minimale, lesdits signaux comprenant pour chaque émetteur (3) un premier signal (S1) modulé par le code et un deuxième signal (S2) déphasé par rapport au premier signal (S1), le deuxième signal (S2) étant modulé par le code qui est retardé par rapport au code modulant le premier signal (S1),

le récepteur (2) étant configuré pour recevoir les signaux émis par les émetteurs (3) et mettant en oeuvre, pour la poursuite du premier (S1) et du deuxième (S2) signal émis par un des émetteurs (3), un signal local modulé par le code, et pour calculer une fonction de corrélation entre le signal local du récepteur et un signal résultant d'une combinaison des signaux émis par les émetteurs du système,

le pic de corrélation principal du premier signal (S1) et celui du deuxième signal (S2) émis par chaque émetteur (3) étant disposés dans une plage blanche d'une fonction de corrélation calculée entre le signal local du récepteur (2) et les signaux émis par tous les autres émetteurs (3) du système (1).

**Patentansprüche**

**1.** Verfahren zur Reduktion der Blendung mindestens eines Empfängers (2) innerhalb eines Positionsbestimmungssystems (1), wobei das System aufweist:

- mehrere Sender (3), wobei jeder Sender mit ein und demselben Code modulierte Signale sendet, deren Autokorrelationsfunktion einen Hauptpeak und mindestens einen weißen Bereich (D), in welchem diese Autokorrelationsfunktion minimal ist, aufweist, wobei die Signale für jeden Sender (3) ein mit dem Code moduliertes erstes Signal (S1) und ein bezüglich des ersten Signals phasenverschobenes zweites Signal (S2) aufweisen, wobei das zweite Signal (S2) mit dem Code moduliert ist, welcher bezüglich des das erste Signal (S1) modulierenden Codes verzögert ist,

- einen Empfänger (2), wobei dieser dafür ausgelegt ist, die von den Sendern (3) gesendeten Signale zu erfassen, und für die Verfolgung des ersten (S1) und des zweiten (S2) Signals, die von einem der Sender (3) gesendet werden, ein mit dem Code moduliertes lokales Signal einsetzt,

wobei bei dem Verfahren:

- jeder Sender (3) das erste (S1) bzw. zweite (S2) Signal mit dem Code moduliert sendet, dessen Phase von den Phasen des Codes, der das erste (S1) bzw. zweite (S2) Signal der anderen Sender (3) des Systems moduliert, verschieden ist, wobei der Hauptkorrelationspeak des ersten Signals (S1) und derjenige des zweiten Signals (S2), die von jedem Sender (3) gesendet werden, in einem weißen Bereich (D) einer Korrelationsfunktion angeordnet sind, die zwischen dem lokalen Signal des Empfängers und den von allen anderen Sendern (3) des Systems gesendeten Signalen berechnet wird,
und

- eine Korrelationsfunktion zwischen dem lokalen Signal des Empfängers und einem Signal, das aus einer Kombination der von den Sendern des Systems gesendeten Signale resultiert, berechnet wird.

**2.** Verfahren nach Anspruch 1, wobei der verwendete Code ein M-Sequenz-Code ist.

**3.** Verfahren nach Anspruch 1, wobei für die Sender (3) des Systems (1) im Voraus die Phasenverschiebung des das erste (S1) bzw. zweite (S2) Signal modulierenden Codes von einem Sender (3) zum anderen gewählt wird, derart, dass der Hauptkorrelationspeak des ersten Signals und derjenige des zweiten Signals jedes Senders in einem weißen Bereich (D) der Korrelationsfunktion liegen, die zwischen dem lokalen Signal und den von allen anderen Sendern des Systems gesendeten Signalen berechnet wird.

**4.** Verfahren nach dem vorhergehenden Anspruch, wobei die Codephasenverschiebung zwischen dem Code, der das von einem Sender (3) gesendete erste Signal (S1) moduliert, und dem Code, der das von einem anderen Sender (3) gesendete erste Signal (S1) moduliert, gleich der Codephasenverschiebung zwischen dem Code, der das von dem Sender (3) gesendete zweite Signal (S2) moduliert, und dem Code, der das von dem anderen Sender (3) gesendete zweite Signal (S2) moduliert, ist.

**5.** Verfahren nach einem der vorhergehenden Ansprüche, wobei die Verzögerung des Codes, der das zweite Signal (S2) moduliert, bezüglich des Codes, der das erste Signal (S1) moduliert, für mindestens zwei Sender (3) des Systems dieselbe ist.

**6.** Verfahren nach einem der Ansprüche 1 bis 4, wobei die Verzögerung des Codes, der das zweite Signal (S2) moduliert, bezüglich des Codes, der das erste Signal (S1) moduliert, für mindestens zwei Sender (3) des Systems verschieden ist.

**7.** Verfahren nach einem der Ansprüche 1 bis 6, wobei die Phasenverschiebung zwischen dem ersten (S1) und dem zweiten (S2) Signal, das von jedem Sender gesendet wird, um nicht mehr als 10 % von 180° abweicht.

**8.** Verfahren nach einem der vorhergehenden Ansprüche, welches in Innenräumen *(indoor)* durchgeführt wird.

**9.** Verfahren nach einem der vorhergehenden Ansprüche, wobei der Empfänger (2) eine Anti-Aliasing-Filterung der von den Sendern (3) gesendeten Signale durchführt, insbesondere mithilfe eines Filters mit einer Bandbreite, die kleiner oder gleich 10 MHz ist, insbesondere kleiner oder gleich 8 MHz, insbesondere kleiner oder gleich 6 MHz, insbesondere kleiner oder gleich 4 MHz, insbesondere kleiner oder gleich 2 MHz.

**10.** Verfahren nach einem der vorhergehenden Ansprüche, wobei der Empfänger (2) eine Abtastung der von den Sendern (3) gesendeten Signale mit einer solchen Abtastfrequenz durchführt, dass das Verhältnis zwischen dieser Abtastfrequenz und der Breite des Basisspektrums der gesendeten Signale größer als 2 ist, insbesondere größer oder gleich 5, insbesondere größer oder gleich 10, insbesondere größer oder gleich 20, insbesondere größer oder gleich 30, insbesondere größer oder gleich 40, insbesondere größer oder gleich 50.

**11.** Verfahren nach dem vorhergehenden Anspruch, wobei die Sender (3) ein GPS-Signal mit einer Frequenz L1 senden und wobei die Abtastfrequenz zwischen 5 MHz und 100 MHz liegt.

**12.** Verfahren nach einem der vorhergehenden Ansprüche, wobei der Empfänger (3) die Frequenz des Codes, der die von den Sendern (3) gesendeten Signale moduliert, in einem Verhältnis verringert, das höher als 20 ist, insbesondere zwischen 20 und 600 liegt, insbesondere zwischen 50 und 600, insbesondere zwischen 100 und 600, insbesondere zwischen 100 und 150.

**13.** Positionsbestimmungssystem (1), welches aufweist:

- mehrere Sender (3), wobei jeder Sender mit ein und demselben Code modulierte Signale sendet, deren Autokorrelationsfunktion einen Hauptpeak und mindestens einen weißen Bereich (D), in welchem diese Autokorrelationsfunktion minimal ist, aufweist, wobei die Signale für jeden Sender (3) ein mit dem Code moduliertes erstes Signal (S1) und ein bezüglich des ersten Signals (S1) phasenverschobenes zweites Signal (S2) aufweisen, wobei das erste (S1) bzw. zweite (S2) Signal mit dem Code moduliert ist, welcher bezüglich des das erste (S1) bzw. zweite (S2) Signal der anderen Sender (3) des Systems modulierenden Codes verzögert ist, wobei der Hauptkorrelationspeak des ersten Signals (S1) und derjenige des zweiten Signals (S2), die von jedem Sender (3) gesendet werden, in einem weißen Bereich (D) einer Korrelationsfunktion angeordnet sind, die zwischen dem lokalen Signal des Empfängers und den von allen anderen Sendern (3) des Systems gesendeten Signalen berechnet wird,

und

- einen Empfänger (2), der dafür ausgelegt ist, die von den Sendern (3) gesendeten Signale zu empfangen, und für die Verfolgung des ersten (S1) und des zweiten (S2) Signals, die von einem der Sender (3) gesendet werden, ein mit dem Code moduliertes lokales Signal einsetzt, wobei der Empfänger (2) dafür ausgelegt ist, eine Korrelationsfunktion zwischen dem lokalen Signal des Empfängers und einem Signal, das aus einer Kombination der von den Sendern des Systems gesendeten Signale resultiert, zu berechnen.

14. Sender (3), welcher dazu bestimmt ist, innerhalb eines Positionsbestimmungssystems (1), wie in Anspruch 13 definiert, verwendet zu werden, wobei das System mindestens einen weiteren Sender (3) und einen Empfänger (2), der ein lokales Signal einsetzt und dafür ausgelegt ist, die von dem Sender (3) und dem weiteren Sender (3) gesendeten Signale zu erfassen, aufweist, wobei der Sender (3) dafür ausgelegt ist, ein erstes Signal (S1), das mit einem auch von dem anderen Sender des Systems verwendeten Code moduliert ist, und ein zweites Signal (S2), das bezüglich des ersten Signals (S1) phasenverschoben ist, zu senden, wobei das zweite Signal (S2) mit dem Code moduliert ist, welcher bezüglich des das erste Signal (S1) modulierenden Codes verzögert ist,

wobei der Hauptkorrelationspeak des ersten Signals (S1) und derjenige des zweiten Signals (S2), die von jedem Sender (3) gesendet werden, in einem weißen Bereich (D) einer Korrelationsfunktion angeordnet sind, die zwischen dem lokalen Signal des Empfängers (2) und den von allen anderen Sendern (3) des Systems (1) gesendeten Signalen berechnet wird.

15. Empfänger (2), welcher dazu bestimmt ist, innerhalb eines Positionsbestimmungssystems (1), wie in Anspruch 13 definiert, verwendet zu werden, wobei das System mehrere Sender (3) aufweist, die jeweils mit ein und demselben Code modulierte Signale senden, deren Autokorrelationsfunktion einen Hauptpeak und mindestens einen weißen Bereich (D), in welchem diese Autokorrelationsfunktion minimal ist, aufweist, wobei die Signale für jeden Sender (3) ein mit dem Code moduliertes erstes Signal (S1) und ein bezüglich des ersten Signals (S1) phasenverschobenes zweites Signal (S2) aufweisen, wobei das zweite Signal (S2) mit dem Code moduliert ist, welcher bezüglich des das erste Signal (S1) modulierenden Codes verzögert ist,

wobei der Empfänger (2) dafür ausgelegt ist, die von den Sendern (3) gesendeten Signale zu empfangen, und für die Verfolgung des ersten (S1) und des zweiten (S2) Signals, die von einem der Sender (3) gesendet werden, ein mit dem Code moduliertes lokales Signal einsetzt, und dafür ausgelegt ist, eine Korrelationsfunktion zwischen dem lokalen Signal des Empfängers und einem Signal, das aus einer Kombination der von den Sendern des Systems gesendeten Signale resultiert, zu berechnen,

wobei der Hauptkorrelationspeak des ersten Signals (S1) und derjenige des zweiten Signals (S2), die von jedem Sender (3) gesendet werden, in einem weißen Bereich einer Korrelationsfunktion angeordnet sind, die zwischen dem lokalen Signal des Empfängers (2) und den von allen anderen Sendern (3) des Systems (1) gesendeten Signalen berechnet wird.

## Claims

1. A method for reducing the glare of at least one receiver (2) within a positioning system (1), the system comprising:

- a plurality of emitters (3), each emitter emitting signals modulated by one and the same code whose auto-correlation function exhibits a main peak and at least one white region (D) in which said auto-correlation function is a minimum, said signals comprising for each emitter (3) a first signal (S1) modulated by the code and a second signal (S2) phase-shifted with respect to the first signal, the second signal (S2) being modulated by the code which is delayed with respect to the code modulating the first signal (S1),

- a receiver (2), the latter being configured to detect the signals emitted by the emitters (3) and implementing, for the tracking of the first (S1) and of the second (S2) signal emitted by one of the emitters (3), a local signal modulated by the code,

in which method:

- each emitter (3) emits the first (S1), respectively second (S2), signal modulated by the code whose phase is different from the phases of the code modulating the first (S1), respectively second (S2), signal of the other emitters (3) of the system, the main correlation peak of the first signal (S1) and that of the second signal (S2) emitted by each emitter (3) being disposed in a white region (D) of a calculated correlation function for the correlation between the local signal of the receiver and the signals emitted by all the other emitters (3) of the system,

and,

- a correlation function is calculated for the correlation between the local signal of the receiver and a signal resulting from a combination of the signals emitted by the emitters of the system.

2.  The method as claimed in claim 1, in which the code used is a maximal length sequence code.

3.  The method as claimed in claim 1, in which, for the emitters (3) of the system (1), the phase shift of the code modulating the first (S1), respectively second (S2), signal are chosen beforehand from one emitter (3) to the next, in such a way that the main correlation peak of the first signal and that of the second signal of each emitter are in a white region (D) of the calculated correlation function for the correlation between the local signal and the signals emitted by all the other emitters of the system.

4.  The method as claimed in the preceding claim, in which the code phase shift between the code modulating the first signal (S1) emitted by one emitter (3) and the code modulating the first signal (S1) emitted by another emitter (3) is equal to the code phase shift between the code modulating the second signal (S2) emitted by said emitter (3) and the code modulating the second signal (S2) emitted by the other emitter (3).

5.  The method as claimed in any one of the preceding claims, in which the delay of the code modulating the second signal (S2) with respect to the code modulating the first signal (S1) is the same for at least two emitters (3) of the system.

6.  The method as claimed in any one of claims 1 to 4, in which the delay of the code modulating the second signal (S2) with respect to the code modulating the first signal (S1) is different for at least two emitters (3) of the system.

7.  The method as claimed in any one of claims 1 to 6, in which the phase shift between the first (S1) and the second (S2) signal emitted by each emitter is equal to 180° to within 10%.

8.  The method as claimed in any one of the preceding claims, being implemented indoors.

9.  The method as claimed in any one of the preceding claims, the receiver (2) performing an anti-aliasing filtering of the signals emitted by the emitters (3), especially with the aid of a filter of bandwidth less than or equal to 10 MHz, especially less than or equal to 8 MHz, especially less than or equal to 6 MHz, especially less than or equal to 4 MHz, especially less than or equal to 2 MHz.

10. The method as claimed in any one of the preceding claims, the receiver (2) performing a sampling of the signals emitted by the emitters (3) according to a sampling frequency such that the ratio between said sampling frequency and the width of the base spectrum of said emitted signals is greater than 2, especially greater than or equal to 5, especially greater than or equal to 10, especially greater than or equal to 20, especially greater than or equal to 30, especially greater than or equal to 40, especially greater than or equal to 50.

11. The method as claimed in the preceding claim, in which the emitters (3) emit a GPS signal of frequency Ll and in which the sampling frequency lies between 5 MHz and 100 MHz.

12. The method as claimed in any one of the preceding claims, in which the receiver (3) decreases the frequency of the code modulating the signals emitted by the emitters (3) by a ratio of greater than 20, especially lying between 20 and 600, especially between 50 and 600, especially between 100 and 600, especially between 100 and 150.

13. A positioning system (1), comprising:

- a plurality of emitters (3), each emitter emitting signals modulated by one and the same code whose auto-correlation function exhibits a main peak and at least one white region (D) in which said auto-correlation function is a minimum, said signals comprising for each emitter (3) a first signal (S1) modulated by the code and a second signal (S2) phase-shifted with respect to the first signal (S1), the first (S1), respectively second (S2), signal being modulated by the code which is delayed with respect to the code modulating the first (S1), respectively second (S2), signal of the other emitters (3) of the system, the main correlation peak of the first signal (S1) and that of the second signal (S2) emitted by each emitter (3) being disposed in a white region (D) of a calculated correlation function for the correlation between the local signal of the receiver and the signals emitted by all the other emitters (3) of the system,
and
- a receiver (2) configured to receive the signals emitted by the emitters (3) and implementing, for the tracking of the first (S1) and of the second (S2) signal emitted by one of the emitters (3), a local signal modulated by the code, the receiver (2) being configured to calculate a correlation function for the correlation between the local signal of the receiver and a signal resulting from a combination of the signals emitted by the emitters of the system.

14. An emitter (3), intended to be used within a positioning system (1) such as defined in claim 13, said system comprising at least one other emitter (3) and a receiver (2) configured to detect the signals emitted by said emitter (3) and the other emitter (3), said emitter (3) being configured to emit a first signal (S1) modulated by a code common to the other emitter of the system and a second signal (S2) phase-shifted with respect to the first signal (S1), the second signal (S2) being modulated by the code which is delayed with respect to the code modulating the first signal (S1), the main correlation peak of the first signal (S1) and that of the second signal (S2) emitted by each emitter being in a white region (D) of an calculated correlation function for the correlation between the local signal of the receiver (2) and the signals emitted by all the other emitters (3) of the system (1).

15. A receiver (2), intended to be used within a positioning system (1) such as defined in claim 13, said system comprising a plurality of emitters (3) each emitting signals modulated by one and the same code whose auto-correlation function exhibits a main peak and at least one white region (D) in which said auto-correlation function is a minimum, said signals comprising for each emitter (3) a first signal (S1) modulated by the code and a second signal (S2) phase-shifted with respect to the first signal (S1), the second signal (S2) being modulated by the code which is delayed with respect to the code modulating the first signal (S1), the receiver (2) being configured to receive the signals emitted by the emitters (3) and implementing, for the tracking of the first (S1) and of the second (S2) signal emitted by one of the emitters (3), a local signal modulated by the code, and to calculate a correlation function for the correlation between the local signal of the receiver and a signal resulting from a combination of the signals emitted by the emitters of the system, the main correlation peak of the first signal (S1) and that of the second signal (S2) emitted by each emitter being in a white region (D) of an calculated correlation function for the correlation between the local signal of the receiver (2) and the signals emitted by all the other emitters (3) of the system (1).

## Fig. 1

## Fig. 2

Fonction d'autocorrélation Séquence de longueur maximale

Fig. 3

Fig. 4

Bande de signal replié     Bande utile     Bande de signal replié

## Fig. 5

| | Largeurs de bande du Filtre | | | | | Amélioration Maximale possible |
|---|---|---|---|---|---|---|
| | 2 MHz | 4 MHz | 6 MHz | 8 MHz | 10 MHz | |
| Fe=20 MHz | 17,0 dB | 17,5 dB | 17,4 dB | 16,9 dB | 16,7 dB | 17,7 dB |
| Fe=16 MHz | 17,5 dB | 18,7 dB | 18,2 dB | 17,5 dB | n/a | 19,2 dB |
| Fe=12 MHz | 19,2 dB | 19,2 dB | 18,2 dB | n/a | n/a | 21,6 dB |
| Fe=8 MHz | 22,3 dB | 21,0 dB | n/a | n/a | n/a | 25,4 dB |
| Fe=4 MHz | 14,1 dB | n/a | n/a | n/a | n/a | 31,0 dB |

## Fig. 6

Fig. 7

Fig. 8

Fig. 9

Fig. 10

Fig. 11

EP 2 588 884 B1

Fig. 12

Fig. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **VERVISCH-PICOIS A. ; SAMAMA N.** Interference Mitigation in a Repeater and Pseudolite Indoor Positioning System. *IEEE Journal of Selected Topics in Signal Processing,* Octobre 2009, vol. 3 (5), 810-820
- **KAPLAN ELLIOT ; HEGARTY CHRISTOPHER.** Understanding GPS Principles and Applications. Artech House, 2006, 730
- Global Positioning System: Theory & Applications. **VAN DIERENDONCK A. J.** Progress in Astronautics and aeronautics. 1996, vol. 1, 777
- **JARDAK N. ; VERVISCH-PICOIS A. ; JEANNOT M. ; FLUERASU A. ; SAMAMA N.** Optimised tracking loop for multipath mitigation Case of repeater based indoor positioning system. *ENC-GNSS,* Avril 2008
- **VERVISCH-PICOIS A. ; SAMAMA N.** Interference mitigation in a repeater and pseudolite indoor positionning system. *IEEE Journal of selected topics in signal processing,* Octobre 2009, vol. 3 (5), 810-820